(19) Europäisches Patentamt / European Patent Office / Office européen des brevets

(11) **EP 4 376 517 A1**

(12) **EUROPEAN PATENT APPLICATION**
published in accordance with Art. 153(4) EPC

(43) Date of publication:
**29.05.2024 Bulletin 2024/22**

(21) Application number: **22853558.9**

(22) Date of filing: **05.08.2022**

(51) International Patent Classification (IPC):
**H04W 68/02** $^{(2009.01)}$    **H04W 68/00** $^{(2009.01)}$
**H04W 76/28** $^{(2018.01)}$    **H04W 76/27** $^{(2018.01)}$

(52) Cooperative Patent Classification (CPC):
**H04W 68/00; H04W 68/02; H04W 76/27;
H04W 76/28;** Y02D 30/70

(86) International application number:
**PCT/KR2022/011686**

(87) International publication number:
**WO 2023/014183 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2021 KR 20210103468**

(71) Applicant: **Samsung Electronics Co., Ltd.
Suwon-si, Gyeonggi-do 16677 (KR)**

(72) Inventors:
• **JEONG, Seungbeom**
  **Suwon-si, Gyeonggi-do 16677 (KR)**
• **AGIWAL, Anil**
  **Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD AND DEVICE FOR EXTENDED DISCONTINUOUS RECEPTION FOR PAGING IN NEXT-GENERATION MOBILE COMMUNICATION SYSTEM**

(57)    An embodiment of the present disclosure provides an operating method of a user equipment (UE) in a wireless communication system. The operating method may include: establishing a radio resource control (RRC) connection with a camped-on cell; receiving, in an RRC connected mode, a first extended discontinuous reception (eDRX) parameter for core network (CN) paging from a CN; receiving a second eDRX parameter for radio access network (RAN) paging from a base station (BS); transitioning to an RRC idle mode or an RRC inactive mode; calculating a length of a first paging time window (PTW) and a length of a second PTW, based on identity information of the UE, the first eDRX parameter, and the second eDRX parameter; determining a paging monitoring cycle, based on at least one of an RRC mode of the UE, information of a frame being currently monitored, information of the first PTW, or information of the second PTW; and performing paging monitoring, based on the determined paging monitoring cycle.

FIG. 1A

**Description**

Technical Field

The present disclosure relates to a mobile communication system, and to operations of a user equipment, a base station, and a core network.

Background Art

In order to meet increasing demand with respect to wireless data traffic after the commercialization of 4th generation (4G) communication systems, efforts have been made to develop 5th generation (5G) or pre-5G communication systems. For this reason, 5G or pre-5G communication systems are referred to as 'beyond 4G network' communication systems or 'post long term evolution (post-LTE)' systems. In order to achieve a high data rate, implementation of 5G communication systems in an ultra-high frequency millimeter-wave (mmWave) band (e.g., a 60-gigahertz (GHz) band) is being considered. In order to reduce path loss of radio waves and increase a transmission distance of radio waves in the ultra-high frequency band for 5G communication systems, various technologies such as beamforming, massive multiple-input and multiple-output (massive MIMO), full-dimension MIMO (FD-MIMO), array antennas, analog beamforming, and large-scale antennas are being studied. Also, in order to improve system networks for 5G communication systems, various technologies such as evolved small cells, advanced small cells, cloud radio access networks (Cloud-RAN), ultra-dense networks, device-to-device communication (D2D), wireless backhaul, moving networks, cooperative communication, coordinated multi-points (CoMP), and received-interference cancellation have been developed. In addition, for 5G systems, advanced coding modulation (ACM) technologies such as hybrid frequency-shift keying (FSK) and quadrature amplitude modulation (QAM) (FQAM) and sliding window superposition coding (SWSC), and advanced access technologies such as filter bank multi-carrier (FBMC), non-orthogonal multiple access (NOMA), and sparse code multiple access (SCMA) have been developed.

The Internet has evolved from a human-based connection network, where humans generate and consume information, to the Internet of things (IoT), where distributed elements such as objects exchange information with each other to process the information. Internet of everything (IoE) technology has emerged, in which the IoT technology is combined with, for example, technology for processing big data through a connection with a cloud server. In order to implement the IoT, various technological elements such as sensing technology, wired/wireless communication and network infrastructures, service interface technology, and security technology are required, such that, in recent years, technologies related to sensor networks for connecting objects, machine-to-machine (M2M) communication, and machine-type communication (MTC) have been studied. In the IoT environment, intelligent Internet technology (IT) services may be provided to collect and analyze data obtained from connected objects to create new value in human life. As existing information technology (IT) and various industries converge and combine with each other, the IoT may be applied to various fields such as smart homes, smart buildings, smart cities, smart cars or connected cars, smart grids, health care, smart home appliances, and advanced medical services.

Various attempts are being made to apply 5G communication systems to the IoT network. For example, technologies related to sensor networks, M2M communication, and MTC are being implemented by using 5G communication technology using beamforming, MIMO, and array antennas. Application of cloud radio access network (Cloud-RAN) as the above-described big data processing technology may be an example of convergence of 5G communication technology and IoT technology.

Also, there are studies to develop a 6th generation (6G) communication system that is about five times faster than a maximum speed of the 5G. Accordingly, in order to achieve a high data rate, implementation in a higher frequency band than the 5G is being considered.

As various services can be provided according to the aforementioned technical features and the development of wireless communication systems, methods of seamlessly providing these services, particularly, paging, are required.

Disclosure

Technical Problem

An embodiment of the present disclosure may provide a method and apparatus for effectively providing services in a wireless communication system.

Technical Solution

Provided is an operating method of a user equipment (UE) in a wireless communication system, the operating method disclosed as a technical means to achieve the aforementioned technical problems and including: establishing a radio resource control (RRC) connection with a camped-on cell; receiving, in an RRC connected mode, a first extended discontinuous reception (eDRX) parameter for core network (CN) paging from a CN; receiving a second eDRX parameter for radio access network (RAN) paging from a base station (BS); transitioning to an RRC idle mode or an RRC inactive mode; calculating a length of a first paging time window (PTW) and a length of a second PTW, based on identity information of the UE, the first eDRX parameter, and the second eDRX parameter; determining a paging monitoring cycle, based on at least one of an RRC mode of the UE, information of a frame being currently monitored, information of the first PTW, or information of the second PTW; and performing paging monitoring, based on the determined cycle.

Provided is a UE operating in a wireless communication system, the UE disclosed as a technical means to achieve the aforementioned technical problems and including a transceiver and a processor coupled with the transceiver. The processor may be configured to establish an RRC connection with a camped-on cell, receive, in an RRC connected mode via the transceiver, a first eDRX parameter for CN paging from a CN, receive, via the transceiver, a second eDRX parameter for RAN paging from a BS, transition to an RRC idle mode or an RRC inactive mode, calculate a length of a first PTW and a length of a second PTW, based on identity information of the UE, the first eDRX parameter, and the second eDRX parameter, determine a paging monitoring cycle, based on at least one of an RRC mode of the UE, information of a frame being currently monitored, information of the first PTW, or information of the second PTW, and perform paging monitoring, based on the determined cycle.

Description of Drawings

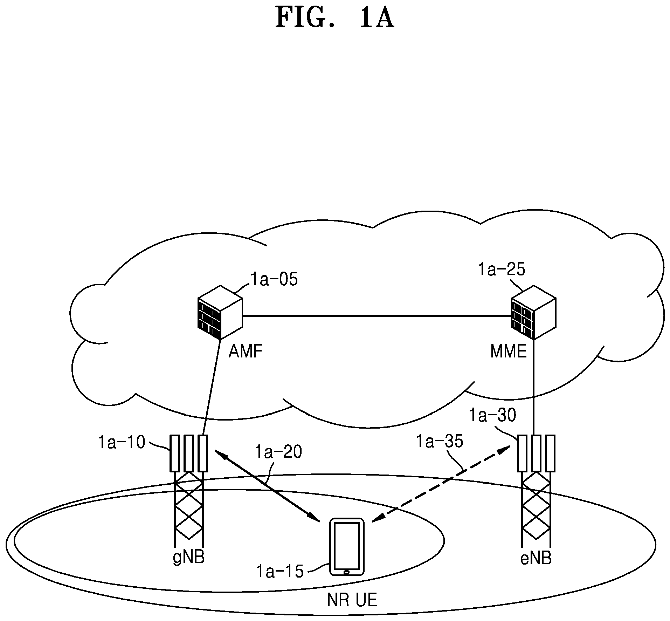

FIG. 1A is a diagram illustrating an architecture of a next-generation mobile communication system, according to an embodiment of the present disclosure.

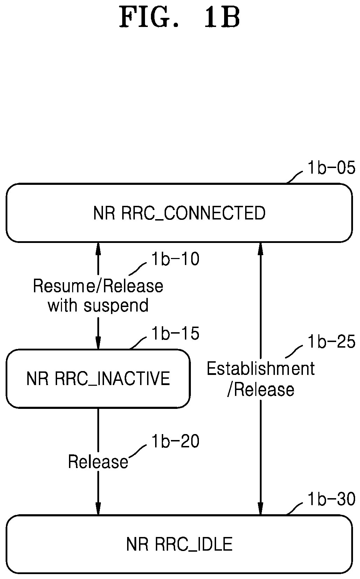

FIG. 1B is a diagram illustrating a release of a radio access state in a next-generation mobile communication system, according to an embodiment of the present disclosure.

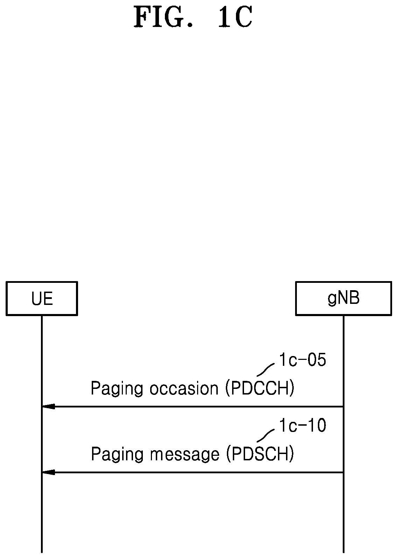

FIG. 1C is a diagram illustrating an operation in which a base station (BS) (or a network) broadcasts a paging occasion and a paging message, according to an embodiment of the present disclosure.

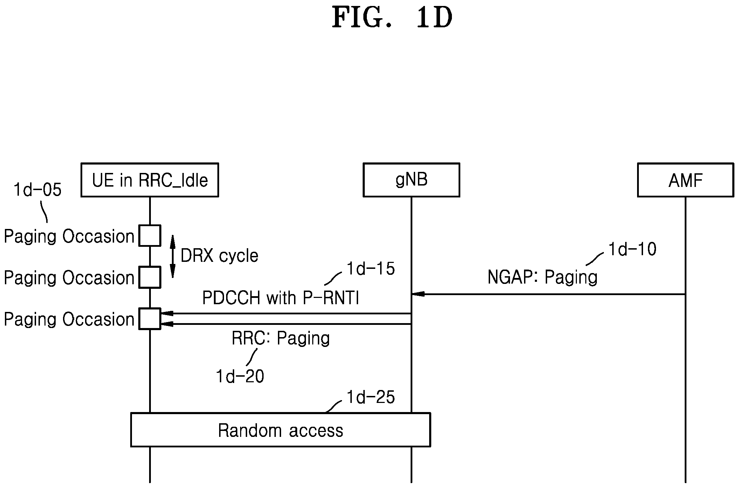

FIG. 1D is a diagram illustrating a core network (CN) paging reception procedure of a user equipment (UE) in an idle mode, according to an embodiment of the present disclosure.

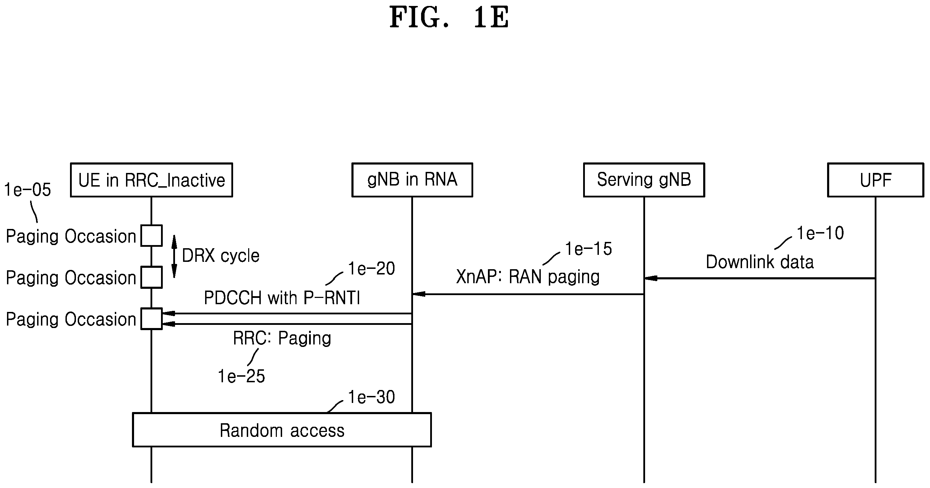

FIG. 1E is a diagram illustrating a Radio Access Network (RAN) paging reception procedure of a UE in an inactive mode, according to an embodiment of the present disclosure.

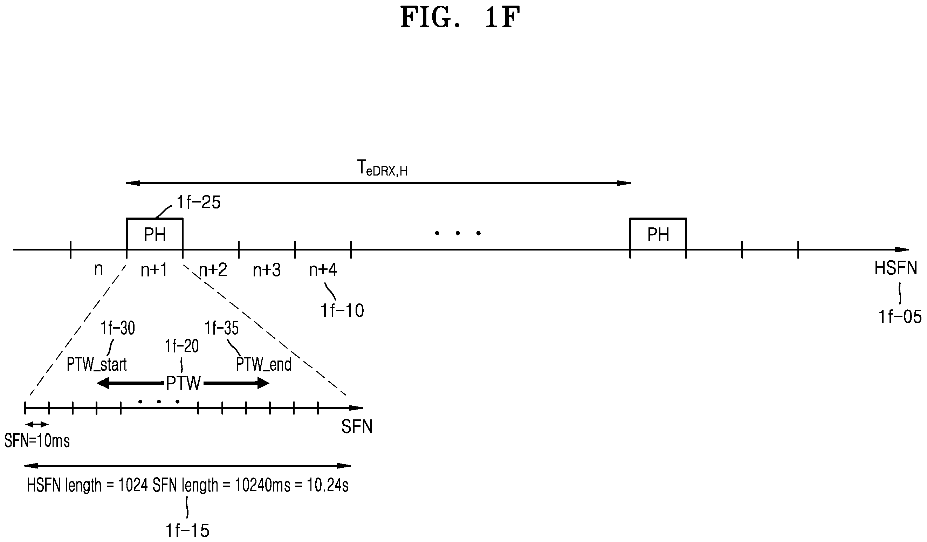

FIG. 1F is a diagram illustrating a paging procedure using extended discontinuous reception (eDRX) in Long Term Evolution (LTE), according to an embodiment of the present disclosure.

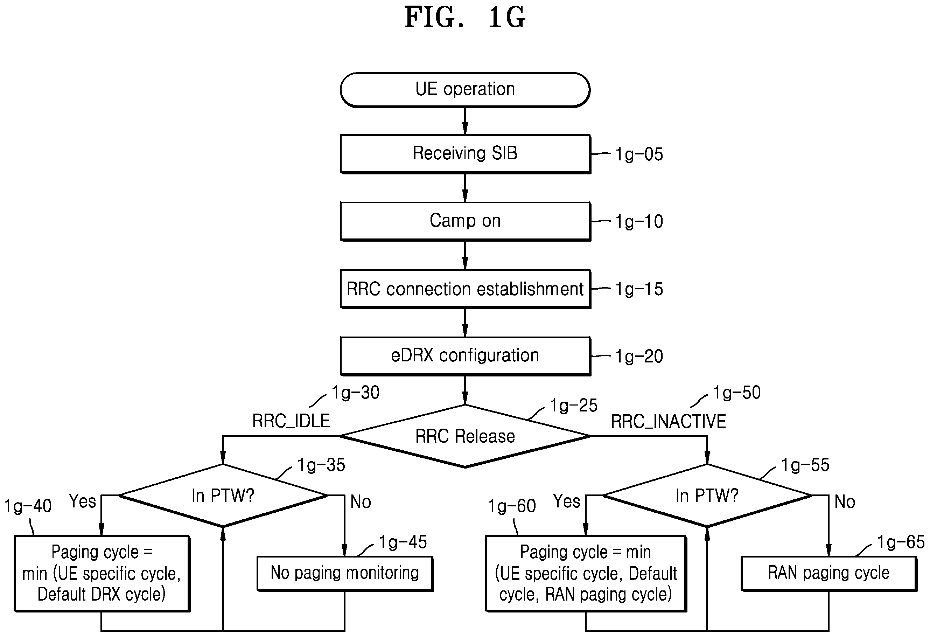

FIG. 1G is a diagram illustrating a procedure for determining, by a UE, a paging monitoring cycle in LTE, according to an embodiment of the present disclosure.

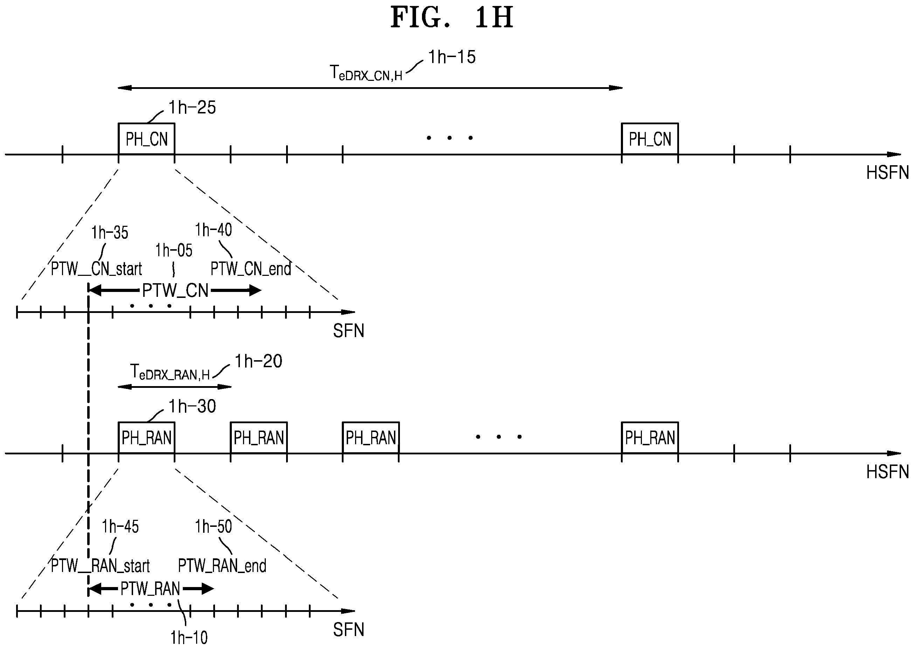

FIG. 1H is a diagram illustrating paging procedures in which each of CN paging and RAN paging uses separate eDRX, according to an embodiment of the present disclosure.

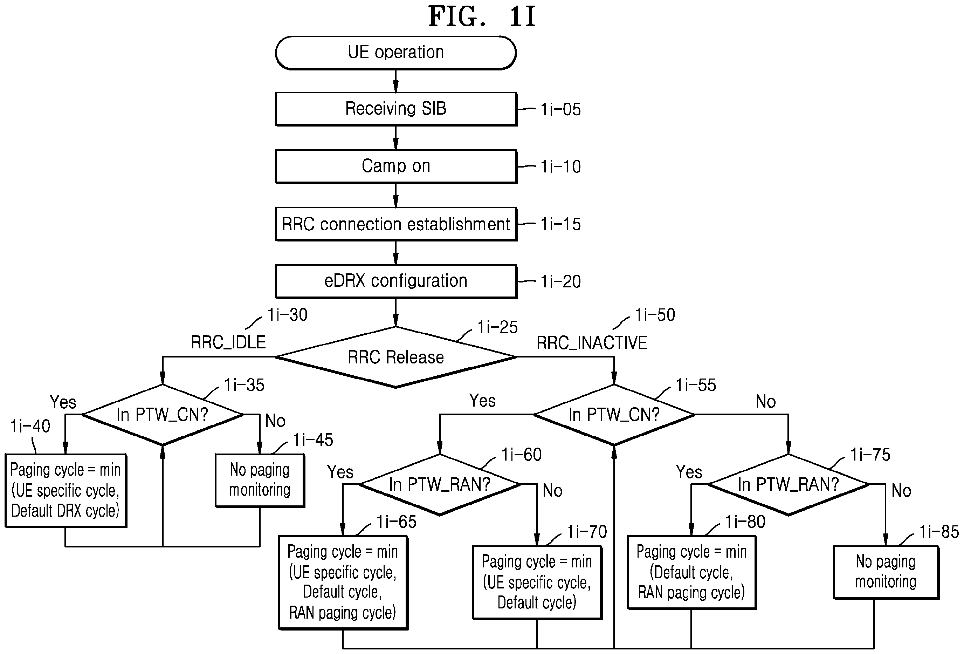

FIG. 1I is a diagram illustrating a procedure for determining, by a UE, a paging monitoring cycle, according to an embodiment of the present disclosure.

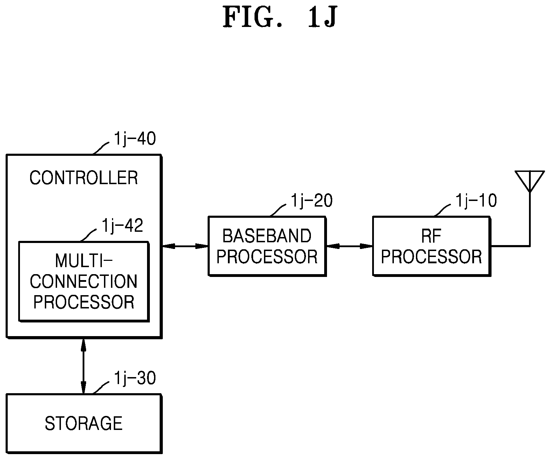

FIG. 1J is a diagram illustrating a UE entity, according to an embodiment of the present disclosure.

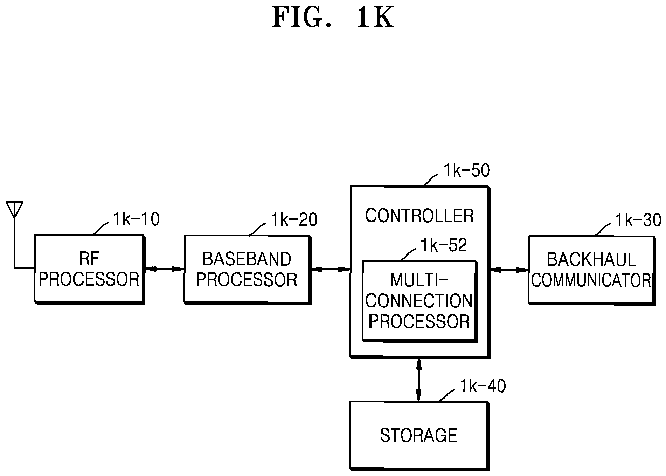

FIG. 1K is a diagram illustrating a BS entity, according to an embodiment of the present disclosure.

Mode for Invention

In the following descriptions of embodiments, descriptions of techniques that are well known in the art and are not directly related to the present disclosure are omitted. By omitting unnecessary descriptions, the essence of the present disclosure may not be obscured and may be explicitly conveyed.

For the same reasons, in the drawings, some elements may be exaggerated, omitted, or roughly illustrated. Also, the size of each element does not exactly correspond to an actual size of each element. In the drawings, the same or corresponding elements are denoted by the same reference numerals.

Advantages and features of the present disclosure and methods of accomplishing the same may be understood more readily by reference to the following detailed descriptions of embodiments and accompanying drawings of the present disclosure. The present disclosure may, however, be embodied in many different forms and should not be construed as limited to embodiments set forth herein; rather these embodiments are provided so that this present disclosure will be thorough and complete, and will fully convey the scope of the present disclosure only defined by the claims to one of ordinary skill in the art. Throughout the specification, like reference numerals denote like elements.

It will be understood that each block of flowchart illustrations, and combinations of blocks in the flowchart illustrations, may be implemented by computer program instructions. The computer program instructions may be provided to a processor of a general-purpose computer, special purpose computer, or other programmable data processing apparatus, such that the instructions, which are executed via the processor of the computer or other programmable data processing apparatus, generate means for performing functions specified in the flowchart block(s). The computer program instructions may also be stored in a computer-executable or computer-readable memory that may direct the computer or other programmable data processing apparatus to function in a particular manner, such that the instructions stored in the computer-executable or computer-readable memory may produce an article of manufacture including instruction means that perform the functions specified in the flowchart block(s). The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block(s).

In addition, each block of the flowchart illustrations may represent a module, segment, or portion of code, which includes one or more executable instructions for performing specified logical function(s). Also, it should be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "... unit" as used in the present embodiment refers to a software or hardware component, such as field-programmable gate array (FPGA) or application-specific integrated circuit (ASIC), which performs certain tasks. However, the term "... unit" does not mean to be limited to software or hardware. A "... unit" may be configured to be in an addressable storage medium or configured to operate one or more processors. In an embodiment, a "... unit" may include components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "... units" may be combined into fewer components and "... units" or further separated into additional components and "... units". Further, the components and "... units" may be implemented to operate one or more central processing units (CPUs) in a device or a secure multimedia card.

Hereinafter, terms identifying an access node, terms indicating network entities, terms indicating messages, terms indicating an interface between network entities, and terms indicating various pieces of identification information, as used in the following description, are exemplified for convenience of descriptions. Accordingly, the present disclosure is not limited to terms to be described below, and other terms indicating objects having equal technical meanings may be used.

For convenience of descriptions, the present disclosure uses terms and names defined in the 3$^{rd}$ Generation Partnership Project (3GPP) Long Term Evolution (LTE) rules. However, the present disclosure is not limited to these terms and names, and may be equally applied to communication systems conforming to other standards. In the present disclosure, an evolved node B (eNB) may be interchangeably used with a next-generation node B (gNB) for convenience of descriptions. That is, a base station described by an eNB may represent a gNB. Also, the term "terminals (UEs)" may refer to not only mobile phones, Narrowband Internet of Things (NB-IoT) devices, and sensors but also other wireless communication devices.

Hereinafter, a base station is an entity that allocates resources to a terminal, and may be at least one of a gNode B, an eNode B, a Node B, a base station (BS), a radio access unit, a BS controller, or a node on a network. A terminal may include a user equipment (UE), a mobile station (MS), a cellular phone, a smartphone, a computer, or a multimedia system capable of performing a communication function. However, the present disclosure is not limited to the above example.

The present disclosure may be applied to the 3GPP New Radio (NR) (5G mobile communication standards). The present disclosure is applicable to intelligent services (e.g., smart home, smart building, smart city, smart car or connected car, health care, digital education, retail, security, and safety services) based on 5G communication technology and IoT technology.

Wireless communication systems providing voice-based services in early stages are being developed to broadband wireless communication systems providing highspeed and high-quality packet data services according to communication standards such as high speed packet access (HSPA), long term evolution (LTE) or evolved universal terrestrial radio access (E-UTRA), LTE-advanced (LTE-A), LTE-Pro of 3GPP, high rate packet data (HRPD), ultra mobile broadband (UMB) of 3GPP2, and 802.16e of the Institute of Electrical and Electronics Engineers (IEEE).

As a representative example of the broadband wireless communication systems, LTE systems employ orthogonal frequency division multiplexing (OFDM) for a downlink (DL) and employs single carrier-frequency division multiple access (SC-FDMA) for an uplink (UL). The UL refers to a radio link for transmitting data or a control signal from a terminal (e.g., a UE or an MS) to a base station (e.g., an eNB or a BS), and the DL refers to a radio link for transmitting data or a control signal from the base station to the terminal. The above-described multiple access schemes identify data or control information of each user in a manner that time-frequency resources for carrying the data or control information of each user are allocated and managed not to overlap each other, that is, to achieve orthogonality therebetween.

As post-LTE communication systems, i.e., 5G communication systems need to support services capable of freely reflecting and simultaneously satisfying various requirements of users, service providers, and the like. Services considered for the 5G systems include enhanced mobile broadband (eMBB), massive machine-type communication (mMTC), ultra-reliability low-latency communication (URLLC) services, or the like.

Although LTE, LTE-A, LTE Pro or 5G (or NR, next-generation mobile communication) system is mentioned as an example in the following description, embodiments of the present disclosure may also be applied to other communication systems having similar technical backgrounds or channel types. Also, embodiments of the present disclosure are applicable to other communication systems through modification at the discretion of one of ordinary skill in the art without greatly departing from the scope of the present disclosure.

Provided is an operating method of a UE in a wireless communication system, the operating method disclosed as a technical means to achieve the aforementioned technical problems and including establishing radio resource control (RRC) connection with a camped-on cell, receiving, in an RRC connected mode, a message including configuration information of extended discontinuous reception (eDRX) from a core network (CN) or a BS, transitioning to an idle mode to an inactive mode, calculating a length of a paging time window (PTW), based on identity information of the UE and the eDRX configuration information, determining whether a frame being currently monitored corresponds to a frame within the PTW repeated per a preset cycle, when it is determined that the frame being currently monitored corresponds to the frame within the PTW repeated per the preset cycle, determining a smallest value from among a value configured for a UE-specific cycle and a value configured for a default DRX cycle to be a paging monitoring cycle, and performing paging monitoring, based on the determined cycle.

In the description of the present disclosure, detailed descriptions of the related art are omitted when it is deemed that they may unnecessarily obscure the essence of the present disclosure. Hereinafter, embodiments of the present disclosure will now be described with reference to the accompanying drawings.

FIG. 1A is a diagram illustrating an architecture of a next-generation mobile communication system, according to an embodiment of the present disclosure.

Referring to FIG. 1A, a radio access network of the next-generation mobile communication system (NR) may include a next-generation BS (gNB: New Radio Node B) 1a-10 and a new radio core network. The radio core network may include an Access Management Function (AMF) 1a-05, and the present disclosure is not limited to the example above. A New Radio User Equipment (NR UE) 1a-15 may access an external network via the gNB 1a-10 and the AMF 1a-05.

In FIG. 1A, the gNB 1a-10 may correspond to an eNB of the legacy LTE system. The gNB 1a-10 may be connected (1a-20) to the NR UE 1a-15 via wireless channels and may provide, to the NR UE 1a-15, superior services compared to a legacy Node B. As all user traffic data are serviced via shared channels in the next-generation mobile communication system, an entity for collating buffer status information of UEs, available transmission power status information, and channel state information and performing scheduling may be required and the gNB 1a-10 may operate as the entity. One gNB 1a-10 may generally control a plurality of cells. The next-generation mobile communication system may have a maximum bandwidth greater than the maximum bandwidth of the legacy LTE system so as to achieve an ultra-high data rate, compared to the legacy LTE system, and may additionally apply a beamforming technology by using OFDM as a radio access technology.

Furthermore, according to an embodiment, the NR gNB 1a-10 may apply an Adaptive Modulation & Coding (AMC) scheme to determine a modulation scheme and a channel coding rate in accordance with a channel state of the UE. The AMF 1a-05 may perform functions such as mobility support, bearer configuration, and quality of service (QoS) configuration. The AMF 1a-05 may be an entity for performing a mobility management function and various control functions on the UE and may be connected to a plurality of BSs. Also, the next-generation mobile communication system may cooperate with the legacy LTE system, and the AMF 1a-05 may be connected to a Mobility Management Entity (MME) 1a-25 via a network interface. The MME 1a-25 may be connected to an eNB 1a-30 that is a legacy BS. The UE configured to support LTE-NR Dual Connectivity may transceive data while maintaining connection (1a-35) not only to the gNB 1a-10 but also to the eNB 1a-30.

FIG. 1B is a diagram illustrating a release of a radio access state in a next-generation mobile communication system, according to an embodiment of the present disclosure.

In the next-generation mobile communication system, a UE may have three Radio Resource Control (RRC) states. A connection mode (RRC_CONNECTED) 1b-05 may indicate that the UE is in an RRC state enabled to transmit or receive data. An idle mode (RRC_IDLE) 1b-30 may indicate that the UE is in an RRC state to monitor whether paging is transmitted to itself. The connection mode 1b-05 and the idle mode 1b-30 are RRC states which are applicable to the LTE system, and detailed technology thereof is the same as that of the LTE system. In the next-generation mobile communication system, an inactive mode (RRC_INACTIVE) 1b-15 may be newly applied as well as the connection mode 1b-05 and the idle mode 1b-30. An RRC_INACTIVE RRC state that is newly defined in the next-generation mobile communication system may correspond to an inactive RRC state, an INACTIVE mode, a non-active mode, or the like.

In an RRC state of the inactive mode 1b-15, UE context is maintained in a BS and the UE, and Radio Access Network (RAN)-based paging may be supported. Characteristics of the RRC state of the inactive mode 1b-15 are as below.

- Cell re-selection mobility;
- CN - NR RAN connection (both C/U-planes) has been established for UE;
- The UE AS context is stored in at least one gNB and the UE;
- Paging is initiated by NR RAN (i.e., RAN paging);
- RAN-based notification area is managed by NR RAN;
- NR RAN knows the RAN-based notification area which the UE belongs to;

According to an embodiment, the inactive mode 1b-15 may transition to the connection mode 1b-05 or the idle mode 1b-30 via a particular procedure.

Referring to operation 1b-10, the inactive mode 1b-15 may transition to the connection mode 1b-05 in a Resume procedure, and the connection mode 1b-05 may transition to the inactive mode 1b-15 in a Release procedure including suspend configuration information. In operation 1b-10 described above, one or more RRC messages may be transmitted or received between the UE and the BS, and operation 1b-10 described above may include one or more sub-operations.

Referring to operation 1b-20, in a procedure of Resume and then Release, the inactive mode 1b-15 may transition to the idle mode 1b-30.

Referring to operation 1b-25, transition between the connection mode 1b-05 and the idle mode 1b-30 may be performed according to the common LTE technology. For example, transition between the connection mode 1b-05 and the idle mode 1b-30 may be performed in an establishment or release procedure.

FIG. 1C is a diagram illustrating an operation in which a BS (or a network) broadcasts a paging occasion and a paging message, according to an embodiment of the present disclosure.

The NR-based 5G or Next Generation Radio Access Network (NG-RAN) consists of NG-RAN nodes, and in this regard, each NG-RAN node may indicate a gNB. The gNB may provide NR user plane (UP) and control plane (CP) protocol end to a UE. Also, gNBs are connected via an NG interface with respect to a 5G Core (5GC), and in more detail, the gNBs are connected to an Access and Mobility Management Function (AMF) via a NG-Control (NG-C) interface and a User Plane Function (UPF) via a NG-User (NG-U) interface. In the 5G (NR) wireless communication system, a UE may use discontinuous reception (DRX) so as to decrease power consumption in an RRC_IDLE or RRC_INACTIVE mode. The UE in the RRC_IOLE or RRC_INACTIVE state may not always monitor a physical downlink control channel (PDCCH) but may periodically (e.g., in every DRX cycle) monitor a PDCCH for a short time so as to receive a paging occasion, receive a system information (SI) update notification, or receive an emergency notification. A paging message 1c-10 may be transmitted via a physical downlink shared channel (PDSCH). When the paging message 1c-10 exists in the PDSCH, a PDCCH may be indicated with a Paging Radio Network Temporary Identifier (P-RNTI). The P-RNTI may be common to all UEs. UE Identity (e.g., System Architecture Evolution (SAE) Temporary Mobile Subscription Identifier (S-TMSI) for a UE in an RRC_IDLE state or Inactive Radio Network Temporary Identifier (I-RNTI) for a UE in an RRC_INACTIVE state) may be included in the paging message 1c-10 to indicate paging for a particular UE. The paging message 1c-10 may include multiple UE Identities for paging multiple UEs. The paging message 1c-10 may be broadcast via a data channel (e.g., a PDSCH) (e.g., a PDCCH is masked with a P-RNTI). The SI update and emergency notifications are included in Downlink Control Information (DCI), and a PDCCH that carries the DCI may be indicated with a P-RNTI. The UE in the RRC_IOLE or RRC_INACTIVE state may monitor one paging occasion (PO) 1c-05 in every DRX cycle. The UE in the RRC_IOLE or RRC_INACTIVE state may monitor a PO on an initial Downlink Bandwidth part (DL BWP). The UE in an RRC connected state may monitor one or more POs, thereby receiving the SI update notification and receiving the emergency notification. The UE may monitor all POs in a paging DRX cycle, and may monitor at least one PO in an SI modification period. The UE in the RRC_IOLE or RRC_INACTIVE state may monitor a PO on an active DL BWP. The PO is a set of S PDCCH monitoring occasions for paging, and here, 'S' may indicate the number of Synchronization Signal and PBCH (Physical Broadcast channel) blocks (SSBs). The UE may first determine a paging frame (PF) and then may determine a PO for the determined PF. One PF may be a radio frame (10ms). The PF and PO may be determined based on a scheme below.

- The PF for a UE is the radio frame with system frame number 'SFN' which satisfies the equation (SFN + PF_offset) mod T= (T div N)*(UE_ID mod N).
- Index (i_s), indicating the index of the PO is determined by i_s = floor(UE_ID/N) mod Ns.
- T is DRX cycle of the UE.
- In RRC_INACTIVE state, T is determined by the shortest of the UE specific DRX value configured by RRC, UE specific DRX value configured by NAS, and a default DRX value broadcast in system information.
- In RRC_IDLE state, T is determined by the shortest of UE specific DRX value configured by NAS, and a default DRX value broadcast in system information. If UE specific DRX is not configured by upper layers (i.e. NAS), the default value is applied.

- N: number of total paging frames in T
- Ns: number of paging occasions for a PF
- PF_offset: offset used for PF determination
- UE_ID: 5G-S-TMSI mod 1024
- Parameters Ns, nAndPagingFrameOffset, and the length of default DRX Cycle are signaled in SIB1. The values of N and PF_offset are derived from the parameter nAndPagingFrameOffset as defined in TS 38.331. If the UE has no 5G-S-TMSI, for instance when the UE has not yet registered onto the network, the UE shall use as default identity UE_ID = 0 in the PF and i_s formulas above.
- The PDCCH monitoring occasions for paging are determined based on paging search space configuration (paging-SearchSpace) signaled by gNB.
- When SearchSpaceId = 0 is configured for pagingSearchSpace, a PDCCH monitoring occasion for paging may be the same as for RMSI (see the definitions in clause 13 in TS 38.213). When SearchSpaceId = 0 is configured for pagingSearchSpace, Ns may be 1 or 2. In a case of Ns = 1, only a single PO that starts in a first PDCCH monitoring occasion for paging exists in PF. In a case of Ns = 2, a PO exists in a first half frame (i_s = 0) or a second half frame (i_s = 1).
- When SearchSpaceId that is not 0 is configured for pagingSearchSpace, the UE monitors (i_s + 1)th PO. The PDCCH monitoring occasion for paging is determined based on paging search space configuration (paging-Search-Space) signaled by the gNB. PDCCH monitoring occasions for paging which do not overlap with UL symbols (determined according to tdd-UL-DL-ConfigurationCommon) are sequentially numbered from 0 (zero) starting from a first PDCCH monitoring occasion for paging. The gNB may signal parameter firstPDCCH-MonitoringOccasionOfPO for each PO corresponding to the PF. When firstPDCCH-MonitoringOccasionOfPO is signaled, (i_s + 1)th PO is a set of 'S' sequential PDCCH monitoring occasions starting from a PDCCH monitoring occasion number indicated with firstPDCCH-MonitoringOccasionOfPO (That is, (i_s + 1)th value of firstPDCCH-MonitoringOccasionOfPO parameter). Otherwise, (i_s + 1)th PO is a set of 'S' sequential PDCCH monitoring occasions for paging which start from (i_s*S)th PDCCH monitoring occasion for paging. 'S' indicates the number of actually-transmitted SSBs determined based on parameter ssb-PositionsInBurst signaled in a SystemInformationBlock1 received from the gNB. Parameter first-PDCCH-MonitoringOccasionOfPO is signaled, on the initial DL BWP, in SIB1 for paging. When paged on a DL BWP other than the initial DL BWP, parameter first-PDCCH-MonitoringOccasionOfPO is signaled on a corresponding BWP configuration. Detailed descriptions about the above may be referred to TS 38.304.

A PDCCH indicated with a P-RNTI may transfer information according to DCI format 1_0. Information below may indicate information being transferred according to DCI format 1_0 by using a cyclic redundancy check (CRC) scrambled with a P-RNTI.

- Short Messages Indicator - 2 bits according to Table 1.
- Short Messages - 8 bits according to Table 2. If only the scheduling information for Paging is carried, this bit field is reserved.
- Frequency domain resource assignment- $\left\lceil \log_2\left( N_{RB}^{DL,BWP}\left( N_{RB}^{DL,BWP}+1\right)/2\right)\right\rceil$ bits. If only the short message is carried, this bit field is reserved.
- $N_{RB}^{DL,BWP}$ is the size of CORESET 0
- Time domain resource assignment - 4 bits as defined in Subclause 5.1.2.1 of [6, TS38.214]. If only the short message is carried, this bit field is reserved.
- VRB-to-PRB mapping - 1 bit according to Table 7.3.1.1.2-33 of [5, TS 38.212]. If only the short message is carried, this bit field is reserved.
- Modulation and coding scheme - 5 bits as defined in Subclause 5.1.3 of [6, TS38.214], using Table 5.1.3.1-1. If only the short message is carried, this bit field is reserved.
- TB scaling - 2 bits as defined in Subclause 5.1.3.2 of [6, TS38.214]. If only the short message is carried, this bit field is reserved.
- Reserved bits - 6 bits

Table 1 below indicates a Short Message indicator.

[Table 1]

| Bit field | Short Message indicator |
| --- | --- |
| 00 | Reserved |
| 01 | Only scheduling information for Paging is present in the DCI |
| 10 | Only short message is present in the DCI |
| 11 | Both scheduling information for Paging and short message are present in the DCI |

Table 2 below defines a Short Message. Bit 1 indicates a most significant bit.

[Table 2]

| Bit | Short Message |
| --- | --- |
| 1 | *systemInfoModification*<br>If set to 1: indication of a BCCH modification other than SIB6, SIB7 and SIB8. |
| 2 | *etwsAndCmasIndication*<br>If set to 1: indication of an ETWS primary notification and/or an ETWS secondary notification and/or a CMAS notification. |
| 3-8 | Reserved |

The UE may detect PDCCH transmission from the gNB so as to monitor a PO (1c-05), and thus, may identify the Short Message indicator and then may determine whether there is a paging message. When the UE determines, via the Short Message indicator, that there is the paging message, the UE may receive the PDSCH (e.g., the paging message) 1c-10.

[Table 3]

```
Paging ::=                              SEQUENCE {
      pagingRecordList                        PagingRecordList
OPTIONAL, -- Need N
      lateNonCriticalExtension                OCTET STRING
OPTIONAL,
      nonCriticalExtension                    SEQUENCE{}
OPTIONAL
}


PagingRecordList ::=                    SEQUENCE (SIZE(1..maxNrofPageRec)) OF PagingRecord


PagingRecord ::=                        SEQUENCE {
      ue-Identity                           PagingUE-Identity,
      accessType                            ENUMERATED {non3GPP}    OPTIONAL,   -- Need N
      ...
}


PagingUE-Identity ::=                   CHOICE {
      ng-5G-S-TMSI                          NG-5G-S-TMSI,
      fullI-RNTI                            I-RNTI-Value,
      ...
}
```

A paging message format is the same as in Table 3. One paging message may include a list with an entry of PagingRecord, and each entry may include ue-Identity for indicating which UE is allocated paging. If a UE finds, from the list, PagingRecord that is the same as its UE identity (e.g., S-TMSI or I-RNTI), the UE may start an operation of transitioning to an RRC connected mode.

Depending on which entity initiates paging, it may be divided into two cases. The case of 'CN-initiated paging' or 'CN paging' indicates a case where a CN or an AMF or an MME initiates paging, and the case of 'RAN-initiated paging' or 'RAN paging' indicates a case where a RAN (a BS or a gNB or an eNB) initiates paging.

The UE in an idle mode monitors a paging channel so as to receive CN paging. The UE in an inactive mode monitors a paging channel so as to receive not only CN paging but also RAN paging. UEs do not need to continuously monitor a paging channel. The UEs may be requested to monitor a paging channel during only a paging occasion (PO) one time per a DRX cycle defined in TS 38.304. A paging DRX cycle may be configured by a network.

1) For CN paging, a default cycle (or a default CN paging cycle) may be broadcast in system information.
2) For CN paging, a UE specific cycle (or a UE specific CN paging cycle) may be configured by NAS signaling.
3) For RAN paging, a UE specific cycle (or a UE specific RAN paging cycle or a RAN paging cycle) may be configured by RRC signaling.

The UE may use, as a paging monitoring cycle, a smallest value among DRX cycles that are applicable (that is, configured) according to an RRC mode. That is, the UE in an idle mode may use a smaller value among a default CN paging cycle and a UE specific CN paging cycle (if configured). The UE in an inactive mode may use a smallest value among a default CN paging cycle and a UE specific CN paging cycle (if configured) and a RAN paging cycle (if configured).

FIG. 1D is a diagram illustrating a CN paging reception procedure of a UE in an idle mode (UE in RRC_Idle), according to an embodiment of the present disclosure.

The UE in an idle mode may monitor a paging channel during a paging occasion (PO) 1d-05 per a pre-defined DRX cycle so as to save power consumption That is, the UE may enter a sleep mode between POs. In each PO, the UE may scan a PDCCH having a CRC scrambled with a P-RNTI. If a UPF receives downlink data for the UE, the UPF may allow an AMF to initiate a paging procedure via an SMF. In operation 1d-10, the AMF may manage location information of the UE in a unit of registered Tracking Areas, and may transmit a NG application protocol (NGAP) paging message to all gNBs included in registered Tracking Areas to which the UE belongs. The gNBs having received the NGAP paging message transmits a PDCCH (having CRC scrambled with a P-RNTI), in synchronization with a PO of the UE (see operation 1d-15, and operation 1c-05 of FIG. 1C). The UE that is scanning a PDCCH may detect PDCCH transmission from a gNB, and may receive an RRC paging message (see operation 1d-20, and operation 1c-10 of FIG. 1C). If a UE finds, from the RRC paging message, PagingRecord that is the same as its UE identity (e.g., S-TMSI or I-RNTI), the UE may perform Random access for RRC establishment (see operation 1d-25).

FIG. 1E is a diagram illustrating a RAN paging reception procedure of a UE in an inactive mode (UE in RRC_Inactive), according to an embodiment of the present disclosure.

The UE in an inactive mode may monitor a paging channel during a paging occasion (PO) 1e-05 per a pre-defined DRX cycle so as to save power consumption. That is, the UE may enter a sleep mode between POs. In each PO, the UE may scan a PDCCH having a CRC scrambled with a P-RNTI. If a UPF receives downlink data for the UE, the UPF may transfer the received data to a serving BS (Serving gNB) (see operation 1e-10). The serving gNB may store or manage a location history of the UE in a unit of RAN Notification Area (RNA). The serving gNB may transmit an Xn application protocol (XnAP) RAN paging message to all gNBs in an RNA to which the UE belongs (see operation 1e-15). The gNBs having received the XnAP RAN paging message transmit a PDCCH (having CRC scrambled with a P-RNTI), in synchronization with a PO of the UE (see operation 1e-20, and operation 1c-05 of FIG. 1C). The UE that is scanning a PDCCH may detect PDCCH transmission from the gNB, and may receive an RRC paging message (see operation 1e-25, and operation 1c-10 of FIG. 1C). If a UE finds, from the RRC paging message, PagingRecord that is the same as its UE identity (e.g., S-TMSI or I-RNTI), the UE may perform Random access for RRC establishment (see operation 1d-25).

FIG. 1F is a diagram illustrating a paging procedure using eDRX in LTE, according to an embodiment of the present disclosure.

If extended DRX (eDRX) is configured for a UE in an idle mode in the LTE, contents below may be applied.

- In an idle mode, a DRX cycle may be extended up to 10.24s or more, and may be extended maximally up to 2621.44s (43.69 min.).
- Hyper-SFN (Hyper Slot Frame Number or H-SFN or HSFN) 1f-05 may be broadcast from a cell and when an SFN value repeats one cycle, HSFN may increase by 1. Referring to 1f-10 of FIG. 1F, when a first HSFN is n, an increase may be performed in a manner that a next HSFN is n+1 and then a HSFN thereafter is n+2. In the LTE, as time passes, an SFN value may increase by 1 per 0 to 1023 (10ms per a radio frame), the SFN returns to 0 after reaching 1023, and at this time, an HSFN value may increase by 1. As a result thereof, referring to 1f-15, a length of one HSFN may be equal to a length of 1024 SFNs and may also be equal to 10240ms (=10.24s).

- Paging Hyperframe (PH) may indicate an H-SFN at which a UE starts paging DRX monitoring during a Paging Time Window (PTW) used in an ECM-IDLE mode. The PH may be determined by the formula known to MME/AMF, a UE, and a BS, and may be determined by functions of an eDRX cycle and a UE identity.
- During the PTW, the UE may monitor paging 1) during the PTW period, or 2) until the UE receives a paging message including a NAS identity of the UE, (or until any of the above two cases occurs first). Start offset of the PTW uniformly exists within the PH, and may be defined according to TS 36.304.
- MME/AMF may determine start points of the PH and the PTW by using the formula defined in TS 36.304. Then the MME/AMF may transmit an S1 paging request immediately before the start of the PTW or during the PTW so as to avoid a procedure for storing, by the BS, a paging message.
- When the UE uses eDRX, requirement conditions of Earthquake and Tsunami Warning System (ETWS), Commercial Mobile Alert Service (CMAS), and Public Warning System (PWS) may not be satisfied. For Extended Access Barring (EAB), if the UE using eDRX supports SIB14, the UE may obtain SIB14 before an RRC connection is established.
- When an eDRX cycle is longer than a system information modification period, the UE may check whether system information stored before RRC connection establishment is valid. For the UE configured with the eDRX cycle longer than the system information modification period, a paging message including *systemInfoModification-eDRX* may be used for a notification of a change in system information.

In the LTE, the UE may be configured, by NAS, eDRX configuration including eDRX cycle ($T_{eDRx}$). Only when the UE is configured eDRX by NAS, and a serving cell indicates, in system information, that eDRX is supported, the UE may operate in eDRX. If the UE is configured with $T_{eDRX}$ =512 radio frames, the UE may monitor a PO according to a legacy DRX operation, T=512 (clause 7.1 in TS 36.304). In other cases, the UE configured with eDRX may monitor a PO 1) according to a legacy DRX operation (clause 7.1 in TS 36.304) during a periodic PTW, or 2) until a paging message including NAS identity of the UE is received (or, until one of 1) and 2) first occurs). A PTW 1f-20 is UE-specific and is determined by 1) a Paging Hyperframe (PH) 1f-25 and 2) a PTW start position (PTW_start) within the PH 1f-25 and 3) a PTW end position (PTW_end) 1f-35. The afore-described three PTW determination parameters are determined by the equation below. In an embodiment, the PTW_end 1f-35 may indicate an SFN outside the PH 1f-25 including the PTW_start 1f-30, according to the PTW_start 1f-30 and a configured length of the PTW 1f-20.

[Table 4]

| |
|---|
| The PH is the H-SFN satisfying the following equation: $$\text{H-SFN mod TeDRX,H} = (\text{UE\_ID\_H mod TeDRX,H}), \text{ where}$$ - UE_ID_H: <br> - 10 most significant bits of the Hashed ID, if P-RNTI is monitored on PDCCH or MPDCCH <br><br> - 12 most significant bits of the Hashed ID, if P-RNTI is monitored on NPDCCH <br><br> - $T_{eDRX,H}$ : eDRX cycle of the UE in Hyper-frames, ($T_{eDRX,H}$ =1, 2, ... , 256 Hyper-frames) (for NB-IoT, $T_{eDRX,H}$ =2, ..., 1024 Hyper-frames) and configured by upper layers. <br> PTW_start denotes the first radio frame of the PH that is part of the PTW and has SFN satisfying the following equation: $$\text{SFN} = 256 \times i_{eDRX}, \text{ where}$$ |
| $$- i_{eDRX} = \text{floor}(\text{UE\_ID\_H} / T_{eDRX,H}) \bmod 4$$ PTW_end is the last radio frame of the PTW and has SFN satisfying the following equation: $$\text{SFN} = (\text{PTW\_start} + L \times 100 - 1) \bmod 1024, \text{ where}$$ - L = Paging Time Window length (in seconds) configured by upper layers <br> Hashed ID is defined as follows: <br> Hashed_ID is Frame Check Sequence (FCS) for the bits b31, b30, ..., b0 of S-TMSI or 5G-S-TMSI. 5G-S-TMSI is used for Hashed-ID if the UE supports connection to 5GC and NAS indicated to use 5GC for the selected cell. <br> S-TMSI = <b39, b38, ..., b0> as defined in TS 23.003 [35] <br> 5G-S-TMSI = <b47, b46, ..., b0> as defined in TS 23.003 [35]. <br> The 32-bit FCS shall be the ones complement of the sum (modulo 2) of Y1 and Y2, where |
| - Y1 is the remainder of $x^k$ ($x^{31} + x^{30} + x^{29} + x^{28} + x^{27} + x^{26} + x^{25} + x^{24} + x^{23} + x^{22} + x^{21} + x^{23} + x^{20} + X^{19} + x^{18} + x^{17} + x^{16} + x^{15} + x^{14} + x^{13} + x^{12} + x^{11} + x^{10} + x^9 + x^8 + x^7 + x^6 + x^5 x^4 + x^3 + x^2 + x^1 + 1$) divided (modulo 2) by the generator polynomial $x^{32} + x^{26} + + x^{22} + x^{16} + x^{12} + x^{11} + x^{10} + x^8 + x^7 + x^5 + x^4 + x^2 + x + 1$, where k is 32; and |
| - Y2 is the remainder of Y3 divided (modulo 2) by the generator polynomial $x^{32} + x^{26} + x^{23} + x^{22} + x^{16} + x^{12} + x^{11} + x^{10} + x^8 + x^7 + x^5 + x^4 + x^2 + x + 1$, where Y3 is the product of $x^{32}$ by "b31, b30, ..., b0 of S-TMSI or 5G-S-TMSI", i.e., Y3 is the generator polynomial $x^{32}$ (b31$\times x^{31}$ + b30$\times x^{30}$ + ... + b0$\times$1). |
| NOTE: The Y1 is 0xC704DD7B for any S-TMSI or 5G-S-TMSI value. |

The UE configured with eDRX in the LTE may monitor a PO per a cycle as in Table 5 below, according to its RRC state and whether it is in or outside a PTW. (rf=radio frame, UE specific cycle = UE specific CN paging cycle, Default cycle = Default CN paging cycle)

[Table 5]

| | RRC_IDLE (idle mode) | RRC_INACTIVE (inactive mode) |
|---|---|---|
| In PTW | If $T_{eDRX}$ = 512rf, -> cycle=512rf <br><br><br> 2) Default cycle | If $T_{eDRX}$ = 512rf -> cycle=512rf <br> Others -> <br> 2) Default cycle, |

(continued)

| | RRC_IDLE (idle mode) | RRC_INACTIVE (inactive mode) |
|---|---|---|
| | | a smallest value among configured values |
| Outsid e PTW | If $T_{eDRX}$= 512rf -> cycle=512rf<br>Others -> monitoring is not performed. | If $T_{eDRX}$= 512rf -> cycle=512rf |

FIG. 1G is a diagram illustrating a procedure for determining, by a UE, a paging monitoring cycle in LTE, according to an embodiment of the present disclosure.

In operation 1g-05, the UE may receive system information. In operation 1g-10, the UE may select one cell, based on the received (single or multiple) system information, and may camp on the selected cell. Afterward, in operation 1g-15, the UE may establish an RRC connection. In operation 1g-20, the UE having transitioned to an RRC connected mode may be configured eDRX configuration from a CN via negotiation by using NAS signaling (e.g., Attach request/accept, Tracking area update request/accept message) with the CN (an MME or an AMF). Here, the eDRX configuration may include a PTW length and an eDRX cycle ($T_{eDRX}$). Afterward, in operation 1g-25, RRC connection configuration of the UE is released, and the UE may switch its RRC mode to an idle mode (RRC_IDLE) or an inactive mode (RRC_INACTIVE). The UE configured with the eDRX configuration may calculate its PTW that periodically occurs, by using its identity and the eDRX configuration.

When the UE transitions to the idle mode (RRC_IDLE) in operation 1g-30, in operation 1g-35, the UE may determine whether a current occasion (or an observing time point) is included in the PTW. If the current occasion is included in the PTW, the procedure proceeds to operation 1g-40, and the UE may use, as a paging monitoring cycle (Paging cycle), a smallest value among values of 1) a UE specific cycle and 2) a Default DRX cycle which are configured for the UE. (As described above, when eDRX is configured with a $T_{eDRX}$ value being 512rf, the UE may perform the same operation as legacy DRX by using the configured cycle. Therefore, an embodiment of the present disclosure assumes that a $T_{eDRX}$ value other than 512rf is configured for the UE, and thus, an operation of eDRX different from legacy DRX will now be described.) If the current occasion is not included in the PTW, the procedure may proceed to operation 1g-45, and the UE may not perform paging monitoring. The UE may repeatedly perform a procedure in which, after the UE performs operation 1g-40 or operation 1g-45, the UE proceeds to operation 1g-35 so as to determine whether it is still in or outside the PTW, and selects whether to proceed to operation 1g-40 or proceed to operation 1g-45, according to a result of the determination.

When the UE transitions to the inactive mode (RRC_INACTIVE) in operation 1g-50 after operation 1g-25, in operation 1g-55, the UE may determine whether a current occasion (or an observing time point) is included in the PTW. If the current occasion is included in the PTW, the procedure may proceed to operation 1g-60, and the UE may use, as a paging monitoring cycle (Paging cycle), a smallest value among values of 1) UE specific cycle, 2) Default cycle, and 3) RAN paging cycle which are configured for the UE. (As described above, when eDRX is configured with a $T_{eDRX}$ value being 512rf, the UE may perform the same operation as legacy DRX by using the configured cycle. Therefore, an embodiment of the present disclosure assumes that a $T_{eDRX}$ value other than 512rf is configured for the UE, and thus, an operation of eDRX different from legacy DRX will now be described.) If the current occasion is not included in the PTW, the procedure may proceed to operation 1g-65, and the UE may perform paging monitoring per a RAN paging cycle. The UE may repeatedly perform a procedure in which, after the UE performs operation 1g-60 or operation 1g-65, the UE proceeds to operation 1g-55 so as to determine whether it is still in or outside the PTW, and selects whether to proceed to operation 1g-60 or proceed to operation 1g-65, according to a result of the determination.

FIG. 1H is a diagram illustrating paging procedures in which each of CN paging and RAN paging uses separate eDRX, according to an embodiment of the present disclosure.

In the legacy LTE, it can be said that eDRX and associated technology (PTW, etc.) are used and introduced only for CN paging. That is, a UE in an idle mode may monitor and receive CN paging in a PTW but may not monitor CN paging outside the PTW On the other hand, the UE in an inactive mode may monitor paging in or outside the PTW so as to receive RAN paging. As a result thereof, the UE in an idle mode may monitor one PTW and then may save power consumption in a sleep mode during a long eDRX cycle ($T_{eDRX}$), whereas the UE in an inactive mode continuously monitor paging and thus may not achieve significant energy saving even when the UE is configured with eDRX (regardless of a PTW). In order to solve this problem (i.e., in order for the UE in an inactive mode to enter a sleep mode so as to save power consumption), the present disclosure proposes a scheme of separately defining an eDRX operation for CN paging and an eDRX operation for RAN paging. For example, a PTW (i.e., a PTW_CN 1h-05) for CN paging and a PTW (i.e., a PTW_RAN 1h-10) for RAN paging may be differently used. Also, an eDRX cycle (i.e., $T_{eDRX\_CN}$) for CN paging and an eDRX cycle ($T_{eDRx\_RAN}$) for RAN paging may be differently used. When expressing $T_{eDRX\_CN}$ as a HSFN unit, it may be $T_{eDRX\_CN,H}$ 1h-15. When expressing $T_{eDRX\_RAN}$ as a HSFN unit, it may be $T_{eDRX\_RAN,H}$ 1h-20. That is, a PH (PH_CN 1h-25) of a UE for CN paging may be configured in a cycle of the $T_{eDRX\_CN,H}$ 1h-15, and a PH (PH_RAN 1h-30) for RAN paging may be configured in a cycle of the $T_{eDRX\_RAN,H}$ 1h-20. PTW_CN_start 1h-35 within the PH_CN 1h-25 indicates a SFN at which the PTW_CN 1h-05 starts, and PTW_CN_end 111-40 indicates a SFN at which the PTW_CN 1h-05 ends. The PTW_CN_end 1h-40 may indicate an SFN outside the PH_CN 1h-25 including the PTW_CN_start 1h-35, according to the PTW_CN_start 1h-35 and a configured length L_CN of the PTW_CN 1h-05. Equally, a PTW_RAN_start 1h-45 indicates a SFN at which the PTW_RAN 1h-10 starts within the PH_RAN 1h-30, and a PTW_RAN_end 1h-50 indicates a SFN at which the PTW_RAN 1h-10 ends. The PTW_RAN_end 1h-50 may indicate a SFN outside the PH_RAN 1h-30 including the PTW_RAN_start 1h-45, according to the PTW_RAN_start 1h-45 and a configured length L_RAN of the PTW_RAN 1h-10.

An eDRX parameter (e.g., $T_{eDRX\_CN}$ and L_CN and PH_CN and PTW_CN_start and PTW_CN_end) for CN paging and an eDRX parameter (e.g., $T_{eDRX\_RAN}$ and L_RAN and PH_RAN and PTW_RAN_start and PTW_RAN_end) for RAN paging may be configured or calculated as different values or a same value.

A CN may determine an eDRX parameter (e.g., $T_{eDRX\_CN}$ and L_CN) for CN paging. The CN may configure a UE with an eDRX parameter for CN paging by NAS signaling. Alternatively, the eDRX parameter for CN paging may be configured for the UE via negotiation between the CN and the UE. For example, Attach request/accept, Tracking area update request/accept message, or the like may be used. In order for a BS to identify CN paging timing or in order to help the BS determining a RAN paging eDRX parameter, the CN may transmit the eDRX parameter to the BS. To do so, when an AMF transmits a NGAP paging message to the BS in CN paging, the AMF may include the eDRX parameter in the NGAP paging message. Also, a value of the eDRX parameter may be transmitted as Core Network Assistance Information IE in an NGAP message (e.g., Initial Context Setup Request, UE Context Modification Request, Handover Request, Path Switch Request Acknowledge).

The eDRX parameter for CN paging which is transmitted to the UE or the BS may include some or all of parameters mentioned below, and a parameter being transmitted to the UE and a parameter being transmitted to the BS may be equal to or different from each other.

- $T_{eDRX\_CN}$
- L_CN
- PTW_CN_start
- PTW_CN_end
- Value indicating PH_CN (e.g., HSFN of PH_CN)

A RAN (i.e., the BS) may determine an eDRX parameter (e.g., $T_{eDRX\_RAN}$ and L_RAN) for RAN paging. The RAN may configure the UE with the eDRX parameter for RAN paging by RRC signaling. For example, an RRC Release message, SIB, a new message for eDRX, or the like may be used. Alternatively, the eDRX parameter for RAN paging may be configured for the UE via negotiation between the RAN and the UE. In order for the CN to identify RAN paging timing or in order to help the CN determining a CN paging eDRX parameter, the RAN may transmit an eDRX parameter to the CN. To do so, a value of the eDRX parameter may be transmitted in a NGAP message (e.g., Initial Context Setup Response, UE Context Modification Response, Handover Request Acknowledge, Path Switch Request).

The eDRX parameter for RAN paging which is transmitted to the UE or the CN may include some or all of parameters mentioned below, and a parameter being transmitted to the UE and a parameter being transmitted to the CN may be equal to or different from each other.

- $T_{eDRX\_RAN}$
- L_RAN
- PTW_RAN_start
- PTW_RAN_end
- Value indicating PH_RAN (e.g., HSFN of PH_RAN)

In an embodiment of the FIG. 1H, the PH_CN 1h-25 including the PTW_CN_start 1h-35 may be defined as a HSFN satisfying the formula below.

H-SFN mod $T_{eDRX\_CN,H}$ = (UE_ID_H mod $T_{eDRX\_CN,H}$), where

$T_{eDRX\_CN,H}$ : CN paging eDRX cycle of the UE in Hyper-frames,

In an embodiment of the FIG. 1H, the PH_RAN 1h-30 including the PTW_RAN_start 1h-45 may be defined as a HSFN satisfying the formula below.

H-SFN mod $T_{eDRX\_RAN,H}$ = (UE_ID_H mod $T_{eDRX\_RAN,H}$), where

$T_{eDRX\_RAN,H}$ : RAN paging eDRX cycle of the UE in Hyper-frames,
In the formula for determining the PH_CN 1h-25 and the PH_RAN 1h-30, it may be H-SFN + PH_offset, instead of H-SFN. Here, PH_offset may be a fixed value defined in the standard or may be a value configured by the CN or the BS.

As in an embodiment of FIG. 1H, when the PH_CN 1h-25 and the PH_RAN 1h-30 overlap on a same HSFN, if the PTW_CN_start 1h-35 and the PTW_RAN_start 1h-45 are equally synchronized, complexity of UE/BS/CN in performing a paging procedure may be decreased. To do so, the PTW_CN_start 1h-35 and the PTW_RAN_start 1h-45 may each be defined and used as an SFN that satisfies one of options below.

Option 1) The PTW_CN_start 1h-35 and the PTW_RAN_start 1h-45 always (regardless of three cases described below) use the same formula (one of sub-options) below

- Option 1-1) SFN = 256* $i_{eDRX}$, where $i_{eDRX}$ = floor(UE_ID_H /$T_{eDRX\_CN,H}$) mod 4
- Option 1-2) SFN = offset+ 256* $i_{eDRX}$, where $i_{eDRX}$ = floor(UE_ID_H /$T_{eDRX\_CN,H}$) mod 4
- Option 1-3) SFN = N * $i_{eDRX}$, where $i_{eDRX}$ = floor(UE_ID_H /$T_{eDRX\_CN,H}$) mod (1024/N)
- Option 1-4) SFN = offset + N* $i_{eDRX}$, where $i_{eDRX}$ = floor(UE_ID_H /$T_{eDRX\_CN,H}$) mod (1024/N)
- Option 1-5) SFN = (1024/X)* $i_{eDRX}$, where $i_{eDRX}$ = floor(UE_ID_H /$T_{eDRX\_CN,H}$) mod X, X is number of PTWs within a PH
- Option 1-6) SFN = offset + (1024/X)* $i_{eDRX}$, where $i_{eDRX}$ = floor(UE_ID_H /$T_{eDRX\_CN,H}$) mod X, X is number of PTWs within a PH

In the afore-described options, the same formula is used to equally synchronize values of the PTW_CN_start 1h-35 and the PTW_RAN_start 1h-45. Also, in the afore-described options, the same value may be derived by sharing the $T_{eDRX\_CN,H}$ 1h-15, and to do so, it is requested for both the BS and the UE to be configured the $T_{eDRX\_CN,H}$ 1h-15 determined by the CN. In Options 1-2, 1-4, and 1-6, a point where a PTW starts may be changed by introducing offset. The offset may be a fixed value defined in the standard, or may be a value that is variously set according to one of eDRX parameters configured by the CN or the RAN. In Options 1-3 and 1-4, PTW_start may be configured per N SFN gaps within a PH, and N may be a fixed value defined in the standard or may be a value that is variously set according to one of eDRX parameters configured by the CN or the RAN. Here, when a length of N SFNs is less than a length of the PTW, an overlap between PTWs may occur. In Options 1-5 and 1-6, it indicates that X PTWs may start within the PH. X may be a fixed value defined in the standard, or may be a value that is variously set according to one of eDRX parameters (e.g., according to a $T_{eDRX}$ value or an L value) configured by the CN or the RAN.

In a case where HSFN is not defined as 1024 SFNs but is defined as k SFNs, k may be used instead of 1024 in Options 1-3, 1-4, 1-5, and 1-6. Also, in a case where HSFN is defined as k SFNs and the number of available PTWs within the PH is defined as m, m instead of 4 and k/m instead of 256 may be used in Options 1-1 and 1-2. This may be applied to all options of the present disclosure.

Before next options are described, three cases below are classified in advance.

Case 1: HSFN where PH_CN and PH_RAN overlap
Case 2: HSFN where only PH_CN exists
Case 3: HSFN where only PH_RAN exists

Option 2) For Case 1 and Case 2, one of Options 1-1 to 1-6 described above is used. For Case 3, one of Options 1-1 to 1-6 described above is used, and in this regard, the $T_{eDRX\_RAN,H}$ 1h-20 is used instead of the $T_{eDRX\_CN,H}$ 1h-15.

That is, in Case 1, the PTW_CN_start 1h-35 and the PTW_RAN_start 1h-45 equally use one of Options 1-1 to 1-6, and in Case 2, one of Options 1-1 to 1-6 may be used for the PTW_CN_start 1h-35. In Case 3, one of Options 1-1 to 1-6 may be used for the PTW_RAN_start 1h-45, and in this regard, the $T_{eDRX\_RAN,H}$ 1h-20 may be used instead of the $T_{eDRX\_CN,H}$ 1h-15. Here, values of N, X, and offset for RAN paging may be different from values thereof for CN paging. For example, N_CN may be used for Case 1 and Case 2, N_RAN may be used for Case 3, and N_CN and N_RAN may be defined as different values in the standard or may be values configured by a network (the CN or the RAN). An option scheme (one of Options 1-1 to 1-6) the UE uses for each case may be the same or different. When different, which scheme is used for each case may be fixed in the standard, or may be variously configured by the CN or the RAN.

Option 3) The CN or the RAN may configure the UE with one indicator as an eDRX parameter. If the indicator exists or is configured as True, one of Options 1-1 to 1-6 in the three cases described above may be used. If the indicator does not exist or is configured as False, one of Options 1-1 to 1-6 may be used for Cases 1 and 2, and one of Options 1-1 to 1-6 may be used for Case 3 in which the $T_{eDRX\_RAN,H}$ 1h-20 may be used instead of the $T_{eDRX\_CN,H}$ 1h-15.

An option scheme (one of Options 1-1 to 1-6) the UE uses for each case may be the same or different. When different, which scheme is used for each case may be fixed in the standard, or may be variously configured by the CN or the RAN. The meaning of the indicator may be opposite.

Option 4) In order to synchronize values of the PTW_CN_start 1h-35 and the PTW_RAN_start 1h-45, one of equations below that do not depend on the $T_{eDRX\_CN,H}$ 1h-15 and the $T_{eDRX\_RAN,H}$ 1h-20 may be always (regardless of cases) used.

- Option 4-1) SFN = 256* $i_{eDRX}$, where $i_{eDRX}$ = floor(UE_ID_H) mod 4
- Option 4-2) SFN = 256* $i_{eDRX}$, where $i_{eDRX}$ = floor(hash(UE_ID_H)) mod 4
- Option 4-3) SFN = 256* $i_{eDRX}$, where $i_{eDRX}$ = floor(UE_ID_H_new) mod 4
- Option 4-4) SFN = 256* $i_{eDRX}$, where $i_{eDRX}$ = floor(hash(UE_ID_H_new)) mod 4

In Option 4-2, UE_ID_H is hashed by using a hash function again. As UE_ID_H is already used in PH calculation, it may be hashed again so as to determine PTW_start that is independent from PH result.

In Option 4-3, for UE_ID_H_new that is an input independent from UE_ID_H below used in the PH calculation, some or all of remaining bits of Hashed ID which are not used in UE_ID_H may be used.

UE_ID_H:

- 10 most significant bits of the Hashed ID

For example, UE_ID_H_new may be one of the followings.

UE_ID_H_new:

- The bits of the Hashed ID, which are not used in UE_ID_H
- Among the bits which are not used in UE_ID_H, n MSB bits
- Among the bits which are not used in UE_ID_H, m LSB bits
- k LSB of the Hashed ID
- q LSB of the Hashed ID

In Option 4-4, UE_ID_H_new may be hashed again to be used.

Here, n, m, k, or q may be a fixed value defined in the standard. Alternatively, it may be a value configured by a network (the CN or the RAN).

Option 5) In all options above, the BS or the CN may directly configure $i_{eDRX}$ as a common value (the same value for CN paging and RAN paging). Alternatively, a value (e.g., $i_{eDRX\_CN}$) for CN paging and a value (e.g., $i_{eDRX\_RAN}$) for RAN paging may be separately configured. The configured values may be common to all UEs or may be UE-specific.

Option 6) In all options above, $i_{eDRX}$ may be a fixed and common (the same value for CN paging and RAN paging) value defined in the standard. Alternatively, a value (e.g., $i_{eDRX\_CN}$) for CN paging and a value (e.g., $i_{eDRX\_RAN}$) for RAN paging may be separately defined.

Option 7) In Case 1 described above, a PTW is monitored from a start position where one of the PTW_CN_start 1h-35 and the PTW_RAN_start 1h-45 first (or later) occurs, wherein the PTW_CN_start 1h-35 is obtained by using one of Options 1-1 to 1-6, and the PTW_RAN_start 1h-45 is obtained by using one of Options 1-1 to 1-6 in which the $T_{eDRX\_RAN,H}$ 1h-20 is used instead of the $T_{eDRX\_CN,H}$ 1h-15. The monitoring may be performed up to a position where a first-started PTW (the PTW_RAN 1h-10 or the PTW_CN 1h-05) ends or a position where a later-started PTW (the PTW_CN 1h-05 or the PTW_RAN 1h-10) ends. In Case 2, only CN paging is monitored, and thus, one of Options 1-1 to 1-6 may be performed. In Case 3, one of Options 1-1 to 1-6 is used, and in this regard, the $T_{eDRX\_RAN,H}$ 1h-20 may be used, instead of the $T_{eDRX\_CN,H}$ 1h-15.

Each of the PTW_CN_end 1h-40 and the PTW_RAN_end 1h-50 may be defined as an SFN that satisfies the followings.

PTW_CN_end is the last radio frame of the PTW_CN and has SFN satisfying the following equation:

$$SFN = (PTW\_CN\_start + L\_CN*100 - 1) \bmod 1024,$$

where

- L_CN = Paging Time Window length (in seconds) configured by upper layers

PTW_RAN_end is the last radio frame of the PTW_RAN and has SFN satisfying the following equation:

$$SFN = (PTW\_RAN\_start + L\_RAN *100 - 1) \bmod 1024,$$

where

- L_RAN = Paging Time Window length (in seconds) configured by upper layers

When a HSFN is not defined as 1024 SFNs but is defined as k SFNs, k may be used instead of 1024 in the formula described above. Even in a case where a unit of L_CN or L_RAN is not 'second', L_CN*100 or L_RAN*100 may be additionally modified according to the case.

In an embodiment of the present disclosure, the formula for determining PTW_start may be modified.

$SFN = 256* i_{eDRX}$, where

$$i_{eDRX} = floor(UE\_ID\_H / T_{eDRX,H}) \bmod 4$$

According to the formula, PTW_start values which can be derived are 0, 256, 512, 768, and a gap between the values is 2.56 seconds. According to TS 24.008, a minimum length of a PTW is 1.28 seconds. That is, when a length of the PTW is 1.28 seconds, resources available for paging in all SFN resources are SFNs of 0 to 127, 256 to 383, 512 to 639, and 768 to 895. That is, resources of SFNs of 128 to 255, 384 to 511, 640 to 767, and 896 to 1023 cannot be used for the PTW. Therefore, in order to solve this problem, 128 is used instead of 256, and 8 is used instead of 4 in the formula above, such that a maximum usage of resources and uniform distribution of paging may be achieved. This may be modified or defined as a supportable minimum length of a PTW changes.

FIG. 1I is a diagram illustrating a procedure for determining, by a UE, a paging monitoring cycle, according to an embodiment of the present disclosure.

In operation 1i-05, the UE may receive system information. Here, the UE may also receive, from a BS, an eDRX parameter (e.g., L_RAN, $T_{eDRX\_RAN}$) for RAN paging. In operation 1i-10, the UE may select one cell, based on the received (single or multiple) system information, and may camp on the selected cell. Afterward, in operation 1i-15, the UE may establish an RRC connection. In operation 1i-20, the UE having transitioned to an RRC connected mode may be configured eDRX configuration from a CN via negotiation by using NAS signaling (e.g., Attach request/accept, Tracking area update request/accept message) with the CN (an MME or an AMF). Here, eDRX configuration for CN paging may be included, and L_CN and eDRX cycle ($T_{eDRX\_CN}$), etc. may be included. Also, the UE may also receive, from the BS, an eDRX parameter (e.g., L_RAN, $T_{eDRX\_RAN}$) for RAN paging. Afterward, in operation 1i-25, RRC connection configuration of the UE is released, and the UE may switch its RRC mode to an idle mode (RRC_IDLE) or an inactive mode (RRC_INACTIVE). Here, the UE may also receive, via RRC Release from the BS, an eDRX parameter (e.g., L_RAN, $T_{eDRX\_RAN}$) for RAN paging. The UE configured with the CN paging eDRX configuration and the RAN paging eDRX configuration may calculate its PTW_CN and PTW_RAN that periodically occur, by using its identity and the configured eDRX parameter, etc.

When the UE transitions to the idle mode (RRC_IDLE) in operation 1i-30, in operation 1i-35, the UE may determine whether a current occasion (or an observing time point) is included in the PTW_CN. If the current occasion is included in the PTW_CN, the procedure proceeds to operation 1i-40, and the UE may use, as a paging monitoring cycle (Paging cycle), a smallest value among values of 1) a UE specific cycle and 2) a Default DRX cycle which are configured for the UE. (Similar to the legacy LTE, when eDRX is configured with a particular value (e.g., 512rf) as a $T_{eDRX\_CN}$ value, or $T_{eDRX\_CN}$ is in a particular range, the UE may perform the same operation as legacy DRX. However, embodiments of the present disclosure assume that a $T_{eDRX\_CN}$ value other than the particular value or a value outside the range is configured for the UE, and thus, an operation of eDRX different from the legacy DRX will now be described.) If the current occasion is not included in the PTW_CN, the procedure may proceed to operation 1i-45, and the UE may not perform paging monitoring. The UE may repeatedly perform a procedure in which, after the UE in an idle mode performs operation 1i-40 or operation 1i-45, the UE proceeds to operation 1i-30 so as to determine whether it is still in or outside the PTW_CN, and selects whether to proceed to operation 1i-40 or proceed to operation 1i-45, according to a result of the determination.

When the UE transitions to the inactive mode (RRC_INACTIVE) in operation 1i-50 after operation 1i-25, in operation 1i-55, the UE may determine whether a current occasion (or an observing time point) is first included in the PTW_CN. Afterward, in operation 1i-60 or operation 1i-75, the UE may additionally determine whether the current occasion (or the observing time point) is included in a PTW_RAN. In an embodiment, the UE may first determine whether the current occasion is included in the PTW_RAN and then may determine whether the current occasion is included in the PTW_CN. Alternatively, the UE may simultaneously determine whether the current occasion is included in the PTW_RAN and whether the current occasion is included in the PTW_CN. If the current occasion is included in both the PTW_CN and the PTW_RAN, the procedure proceeds to operation 1i-65, and the UE may use, as a paging monitoring cycle (Paging cycle), a smallest value among values of 1) UE specific cycle, 2) Default cycle, and 3) RAN paging cycle which are configured for the UE. (Similar to the legacy LTE, when eDRX is configured with a particular value (e.g., 512rf) as a $T_{eDRX\_RAN}$ value, or $T_{eDRX\_RAN}$ is in a particular range, the UE may perform the same operation as legacy DRX. Embodiments of the present disclosure assume that a $T_{eDRX\_RAN}$ value other than the particular value or a value outside the range is configured for the UE, and thus, an operation of eDRX different from the legacy DRX will now be described.) If the current occasion is included in the PTW_CN but is not included in the PTW_RAN, the procedure proceeds operation 1i-70, and the UE may perform paging monitoring per a cycle that is a smallest value among values of 1) a UE specific cycle and 2) a Default DRX cycle which are configured for the UE. If the current occasion is not included in the PTW_CN but is included in the PTW_RAN, the procedure proceeds operation 1i-80, and the UE may monitor paging per a RAN paging cycle. Alternatively, in order to receive a notification associated with system information modification or an emergency, the UE may use, as a paging monitoring cycle (Paging cycle), a smallest value among values of 1) a Default cycle and 2) a RAN paging cycle which are configured for the UE. If the current occasion is not included in both the PTW_CN and the PTW_RAN, the procedure may proceed to operation 1i-85, and the UE may not perform paging monitoring.

The monitoring cycles in operation 1i-65, operation 1i-70, operation 1i-80, and operation 1i-85 may be the same or different, and may be one of values below.

- 1) A smallest value among values of 1) UE specific cycle and 2) Default cycle and 3) RAN paging cycle which are configured for the UE
- 1) A smallest value among values of 1) Default cycle and 2) RAN paging cycle which are configured for the UE
- 1) A smallest value among values of 1) UE specific cycle and 2) RAN paging cycle which are configured for the UE
- 1) A smallest value among values of 1) UE specific cycle and 2) Default cycle which are configured for the UE
- UE specific cycle
- Default cycle
- RAN paging cycle
- Monitoring is not performed.

The UE may repeatedly perform a procedure in which, after the UE performs operation 1i-65, operation 1i-70, operation 1i-80, or operation 1i-85, the UE proceeds to operation 1i-55 so as to determine whether it is still in or outside the PTW_CN and the PTW_RAN (operation 1i-55, operation 1i-60, operation 1i-75), and selects whether to proceed to operation 1i-65, proceed to operation 1i-70, proceed to operation 1i-80, or proceed to operation 1i-85, according to a result of the determination.

In the legacy LTE, an operation eDRX different from legacy DRX is defined only when a $T_{eDRX}$ value is equal to or greater than 512rf. Equally, the present disclosure may be applied to only a particular $T_{eDRX}$ (or $T_{eDRX\_CN}$ and $T_{eDRX\_RAN}$) period.

FIG. 1J is a diagram illustrating a UE entity, according to an embodiment of the present disclosure.

Referring to FIG. 1J, the UE may include a radio frequency (RF) processor 1j-10, a baseband processor 1j-20, a storage 1j-30, and a controller 1j-40. However, a configuration of the UE is not limited to the example of FIG. 1J, and the UE may include more elements or fewer elements than those illustrated in FIG. 1J.

The RF processor 1j-10 may perform functions for transmitting and receiving signals via wireless channels, e.g., band conversion and amplification of the signals. For example, the RF processor 1j-10 may up-convert a baseband signal provided from the baseband processor 1j-20, into an RF band signal and then may transmit the RF band signal via an antenna, and may down-convert an RF band signal received via the antenna, into a baseband signal. For example, the RF processor 1j-10 may include a transmit filter, a receive filter, an amplifier, a mixer, an oscillator, a digital-to-analog convertor (DAC), an analog-to-digital convertor (ADC), or the like, but the present disclosure is not limited to the example. Although only one antenna is illustrated in FIG. 1J, the UE may include a plurality of antennas. Also, the RF processor 1j-10 may include a plurality of RF chains. Also, the RF processor 1j-10 may perform beamforming. For the beamforming, the RF processor 1j-10 may adjust phases and intensities of respective signals that are transmitted or received via a plurality of antennas or antenna elements. Also, the RF processor 1j-10 may perform multiple input multiple output (MIMO), and may receive a plurality of layers when performing an MIMO operation.

The baseband processor 1j-20 may perform conversion between a baseband signal and a bit string based on physical layer specifications of a system. For example, for data transmission, the baseband processor 1j-20 may generate complex symbols by encoding and modulating a transmit bit string. Also, for data reception, the baseband processor 1j-20 may reconstruct a received bit string by demodulating and decoding a baseband signal provided from the RF processor 1j-10. For example, according to an OFDM scheme, for data transmission, the baseband processor 1j-20 may generate complex symbols by encoding and modulating a transmit bit string, may map the complex symbols to subcarriers, and then may configure OFDM symbols by performing inverse fast Fourier transform (IFFT) calculation and inserting a cyclic prefix (CP). For data reception, the baseband processor 1j-20 may segment a baseband signal provided from the RF processor 1j-10, into OFDM symbol units, may reconstruct signals mapped to subcarriers by performing fast Fourier transform (FFT) calculation, and then may reconstruct a received bit string by demodulating and decoding the signals.

The baseband processor 1j-20 and the RF processor 1j-10 may transmit and receive signals in a manner described above. Accordingly, the baseband processor 1j-20 and the RF processor 1j-10 may also be referred to as a transmitter, a receiver, a transceiver, or a communicator. Furthermore, at least one of the baseband processor 1j-20 and the RF processor 1j-10 may include different communication modules to support different radio access technologies. Also, at least one of the baseband processor 1j-20 and the RF processor 1j-10 may include different communication modules to process signals of different frequency bands. For example, the different radio access technologies may include a wireless local area network (LAN) (e.g., IEEE 802.11), a cellular network (e.g., LTE), or the like. Also, the different frequency bands may include a super-high frequency (SHF) (e.g., 2.NRHz, NRhz) band and a millimeter wave (mmWave) (e.g., 60 GHz) band. The UE may transmit and receive signals to and from a BS by using the baseband processor 1j-20 and the RF processor 1j-10, and the signals may include control information and data.

The storage 1j-30 may store basic programs, application programs, and data, e.g., configuration information, for operations of the UE. For example, the storage 1j-30 may store data information such as a basic program, an application program, configuration information, or the like for operations of the UE. The storage 1j-30 may provide the stored data, in response to a request by the controller 1j-40.

The storage 1j-30 may include any or a combination of storage media such as a read only memory (ROM), a random access memory (RAM), a hard disk, a compact disc (CD)-ROM, and a digital versatile disc (DVD). Also, the storage 1j-30 may include a plurality of memories. According to an embodiment of the present disclosure, the storage 1j-30 may store a program for performing a method according to the present disclosure.

The controller 1j-40 may control overall operations of the UE. For example, the controller 1j-40 may transmit and receive signals via the baseband processor 1j-20 and the RF processor 1j-10.

Also, the controller 1j-40 may record and read data on or from the storage 1j-40. To this end, the controller 1j-40 may include at least one processor. For example, the controller 1j-40 may include a communication processor (CP) for controlling communications and an application processor (AP) for controlling an upper layer such as an application program. Also, according to an embodiment of the present disclosure, the controller 1j-40 may include a multi-connection processor 1j-42 configured to process processes operating in a multi-connection mode. Also, at least one configuration in the UE may be implemented as one chip.

FIG. 1K is a diagram illustrating a BS entity, according to an embodiment of the present disclosure.

The BS of FIG. 1K may be included in the aforementioned network.

As illustrated in FIG. 1K, the BS may include an RF processor 1k-10, a baseband processor 1k-20, a backhaul communicator 1k-30, a storage 1k-40, and a controller 1k-50. However, a configuration of the BS is not limited to the example of FIG. 1K, and the BS may include more elements or fewer elements than those illustrated in FIG. 1K. The RF processor 1k-10 may perform functions for transmitting and receiving signals via wireless channels, e.g., band conversion and amplification of the signals. For example, the RF processor 1k-10 may up-convert a baseband signal provided from the baseband processor 1k-20, into an RF band signal and then may transmit the RF band signal via an antenna, and may down-convert an RF band signal received via the antenna, into a baseband signal. For example, the RF processor 1k-10 may include a transmit filter, a receive filter, an amplifier, a mixer, an oscillator, a DAC, an ADC, or the like. Although only one antenna is illustrated in FIG. 1K, the RF processor 1k-10 may include a plurality of antennas. Also, the RF processor 1k-10 may include a plurality of RF chains. Also, the RF processor 1k-10 may perform beamforming. For the beamforming, the RF processor 1k-10 may adjust phases and intensities of respective signals that are transmitted or received via a plurality of antennas or antenna elements. The RF processor 1k-10 may perform a DL MIMO operation by transmitting one or more layers.

The baseband processor 1k-20 may perform conversion between a baseband signal and a bit string based on physical layer specifications. For example, for data transmission, the baseband processor 1k-20 may generate complex symbols by encoding and modulating a transmit bit string. Also, for data reception, the baseband processor 1k-20 may reconstruct a received bit string by demodulating and decoding a baseband signal provided from the RF processor 1k-10. For example, according to an OFDM scheme, for data transmission, the baseband processor 1k-20 may generate complex symbols by encoding and modulating a transmit bit string, may map the generated complex symbols to subcarriers, and then may configure OFDM symbols by performing IFFT calcuation and inserting a CP. For data reception, the baseband processor 1k-20 may segment a baseband signal provided from the RF processor 1k-10, into OFDM symbol units, may reconstruct signals mapped to subcarriers by performing FFT calculation, and then may reconstruct a received bit string by demodulating and decoding the signals. The baseband processor 1k-20 and the RF processor 1k-10 may transmit and receive signals in a manner described above. Accordingly, the baseband processor 1k-20 and the RF processor 1k-10 may also be referred to as a transmitter, a receiver, a transceiver, a communicator or a wireless communicator. The BS may transmit and receive signals to and from a UE by using the baseband processor 1k-20 and the RF processor 1k-10, and the signals may include control information and data.

The backhaul communicator 1k-30 may provide an interface for performing communication with other nodes in a network. For example, the backhaul communicator 1k-30 may convert a bit string into a physical signal, the bit string being transmitted from the BS to another node, e.g., an auxiliary BS, a core network, etc., and may convert a physical signal into a bit string, the physical signal being received from the other node.

The storage 1k-40 may store basic programs, application programs, and data, e.g., configuration information, for operations of the BS. For example, the storage 1k-40 may store information about a bearer allocated to the accessing UE, a measurement result reported from the accessing UE, and the like. Also, the storage 1k-40 may store information that is a reference as to whether to provide or stop multi-connection to the UE. The storage 1k-40 may provide the stored data, in response to a request by the controller 1k-50. The storage 1k-40 may include any or a combination of storage media such as a ROM, a RAM, a hard disk, a CD-ROM, and a DVD. Also, the storage 1k-40 may include a plurality of memories. According to an embodiment of the present disclosure, the storage 1k-40 may store a program for performing a method according to the present disclosure.

The controller 1k-50 may control overall operations of a primary BS. For example, the controller 1k-50 may transmit and receive signals via the baseband processor 1k-20 and the RF processor 1k-10 or the backhaul communicator 1k-30. Also, the controller 1k-50 may record and read data on or from the storage 1k-40. To this end, the controller 1k-50 may include at least one processor. Also, according to an embodiment of the present disclosure, the controller 1k-50 may include a multi-connection processor 1k-52 configured to process processes operating in a multi-connection mode.

The methods according to the embodiments of the present disclosure as described in claims or specification may be implemented as hardware, software, or a combination of hardware and software.

When implemented as software, a computer-readable storage medium which stores one or more programs (e.g., software modules) may be provided. The one or more programs stored in the computer-readable storage medium are configured for execution by one or more processors in an electronic device. The one or more programs include instructions directing the electronic device to execute the methods according to the embodiments of the present disclosure as described in the claims or the specification.

The programs (e.g., software modules or software) may be stored in non-volatile memory including random access memory (RAM) or flash memory, read only memory (ROM), electrically erasable programmable read only memory (EEPROM), a magnetic disc storage device, a compact disc (CD)-ROM, a digital versatile disc (DVD), another optical storage device, or a magnetic cassette. Alternatively, the programs may be stored in memory including a combination of some or all of the above-mentioned storage media. Also, a plurality of such memories may be included.

In addition, the programs may be stored in an attachable storage device accessible through any or a combination of communication networks such as Internet, an intranet, a local area network (LAN), a wide LAN (WLAN), a storage area network (SAN), or the like. Such a storage device may access, via an external port, a device performing the embodiments of the present disclosure. Furthermore, a separate storage device on the communication network may access the electronic device performing the embodiments of the present disclosure.

In the afore-described embodiments of the present disclosure, elements included in the present disclosure are expressed in a singular or plural form according to the embodiments. However, the singular or plural form is appropriately selected for convenience of descriptions and the present disclosure is not limited thereto. As such, an element expressed in a plural form may also be configured as a single element, and an element expressed in a singular form may also be configured as plural elements.

Specific embodiments of the present disclosure are described in the descriptions of the present disclosure, but it will be understood that various modifications may be made without departing the scope of the present disclosure. Thus, the scope of the present disclosure is not limited to the embodiments described herein and should be defined by the appended claims and their equivalents. In other words, it will be apparent to one of ordinary skill in the art that other modifications based on the technical ideas of the present disclosure are feasible. Also, the embodiments of the present disclosure may be combined to be implemented, when required. For example, portions of the methods provided by the present disclosure may be combined with each other to enable the BS and the UE to operate. Also, although the embodiments of the present disclosure are described based on 5G and NR systems, modifications based on the technical scope of the embodiments may be applied to other communication systems such as LTE, LTE-A, LTE-A-Pro systems, or the like.

The embodiments of the present disclosure described with reference to the present specification and the drawings are merely illustrative of specific examples to easily facilitate description and understanding of the present disclosure, and are not intended to limit the scope of the present disclosure. It will be apparent to one of ordinary skill in the art that modifications, other than the disclosed embodiments, based on the technical ideas of the present disclosure are feasible.

**Claims**

1. An operating method of a user equipment (UE) in a wireless communication system, the operating method comprising:

   establishing a radio resource control (RRC) connection with a camped-on cell;
   receiving, in an RRC connected mode, a first extended discontinuous reception (eDRX) parameter for core network (CN) paging from a CN;
   receiving a second eDRX parameter for radio access network (RAN) paging from a base station (BS);
   transitioning to an RRC idle mode or an RRC inactive mode;
   calculating a length of a first paging time window (PTW) and a length of a second PTW, based on identity information of the UE, the first eDRX parameter, and the second eDRX parameter;
   determining a paging monitoring cycle, based on at least one of an RRC mode of the UE, information of a frame being currently monitored, information of the first PTW, or information of the second PTW; and
   performing paging monitoring, based on the determined paging monitoring cycle.

2. The operating method of claim 1, wherein the first eDRX parameter is received from the CN by non-access stratum (NAS) signaling.

3. The operating method of claim 1, wherein the first eDRX parameter comprises at least one of an eDRX cycle ($T_{eDRX\_CN}$) for CN paging, a length (L_CN) of the first PTW, a slot frame number (PTW_CN_start) at which the first PTW starts, a slot frame number (PTW_CN_end) at which the first PTW ends, or a value indicating a CN paging hyperframe (PH_CN).

4. The operating method of claim 1, wherein the second eDRX parameter is received by RRC signaling from the BS.

5. The operating method of claim 1, wherein the second eDRX parameter comprises at least one of an eDRX cycle ($T_{eDRX\_RAN}$) for RAN paging, a length (L_RAN) of the second PTW, a slot frame number (PTW_RAN_start) at which the second PTW starts, a slot frame number (PTW_RAN_end) at which the second PTW ends, or a value indicating a RAN paging hyperframe (PH_RAN).

6. The operating method of claim 1, further comprising: when the UE transitions to the RRC idle mode,

   determining whether the frame being currently monitored corresponds to a frame within the first PTW repeated per a CN paging cycle; and
   when it is determined that the frame being currently monitored corresponds to the frame within the first PTW, determining a smallest value among a UE-specific cycle and a default DRX cycle to be a paging monitoring cycle, and when it is determined that the frame being currently monitored does not correspond to the frame within the first PTW, determining not to perform paging monitoring.

7. The operating method of claim 1, further comprising: when the UE transitions to the RRC inactive mode,

   determining whether the frame being currently monitored corresponds to a frame within the first PTW repeated per a CN paging cycle,
   determining whether the frame being currently monitored corresponds to a frame within the second PTW repeated per a RAN paging cycle,
   when it is determined that the frame being currently monitored corresponds to both the frame within the first PTW and the frame within the second PTW, determining a smallest value among a UE-specific cycle, a default DRX cycle, and the RAN paging cycle to be a paging monitoring cycle,
   when it is determined that the frame being currently monitored corresponds to the frame within the first PTW but does not correspond to the frame within the second PTW, determining a smallest value among the UE-specific cycle and the default DRX cycle to be a paging monitoring cycle,
   when it is determined that the frame being currently monitored does not correspond to the frame within the first PTW but corresponds to the frame within the second PTW, determining the RAN paging cycle to be a paging monitoring cycle, and
when it is determined that the frame being currently monitored does not correspond to the frame within the first PTW or the frame within the second PTW, determining not to perform paging monitoring.

8. The operating method of claim 1, wherein the slot frame number (PTW_CN_start) at which the first PTW starts and the slot frame number (PTW_RAN_start) at which the second PTW starts are configured to be the same.

9. A user equipment (UE) operating in a wireless communication system, the UE comprising:

a transceiver; and
a processor coupled with the transceiver and configured to:

establish a radio resource control (RRC) connection with a camped-on cell;
receive, in an RRC connected mode via the transceiver, a first extended discontinuous reception (eDRX) parameter for core network (CN) paging from a CN;
receive, via the transceiver, a second eDRX parameter for radio access network (RAN) paging from a base station (BS);
transition to an RRC idle mode or an RRC inactive mode;
calculate a length of a first paging time window (PTW) and a length of a second PTW, based on identity information of the UE, the first eDRX parameter, and the second eDRX parameter;
determine a paging monitoring cycle, based on at least one of an RRC mode of the UE, information of a frame being currently monitored, information of the first PTW, or information of the second PTW; and
perform paging monitoring, based on the determined paging monitoring cycle.

10. The UE of claim 9, wherein the first eDRX parameter is received via the transceiver from the CN by non-access stratum (NAS) signaling.

11. The UE of claim 9, wherein the first eDRX parameter comprises at least one of an eDRX cycle ($T_{eDRX\_CN}$) for CN paging, a length (L_CN) of the first PTW, a slot frame number (PTW_CN_start) at which the first PTW starts, a slot frame number (PTW_CN_end) at which the first PTW ends, or a value indicating a CN paging hyperframe (PH_CN).

12. The UE of claim 9, wherein the second eDRX parameter is received via the transceiver by RRC signaling from the BS.

13. The UE of claim 9, wherein the second eDRX parameter comprises at least one of an eDRX cycle ($T_{eDRX\_RAN}$) for RAN paging, a length (L_RAN) of the second PTW, a slot frame number (PTW_RAN_start) at which the second PTW starts, a slot frame number (PTW_RAN_end) at which the second PTW ends, or a value indicating a RAN paging hyperframe (PH_RAN).

14. The UE of claim 9, wherein, when transitioning to the RRC idle mode, the processor is configured to,

determine whether the frame being currently monitored corresponds to a frame within the first PTW repeated per a CN paging cycle, and
when it is determined that the frame being currently monitored corresponds to the frame within the first PTW, determine a smallest value among a UE-specific cycle and a default DRX cycle to be a paging monitoring cycle, and when it is determined that the frame being currently monitored does not correspond to the frame within the first PTW, determine not to perform paging monitoring.

15. The UE of claim 9, wherein, when transitioning to the RRC inactive mode, the processor is configured to

determine whether the frame being currently monitored corresponds to a frame within the first PTW repeated per a CN paging cycle,
determine whether the frame being currently monitored corresponds to a frame within the second PTW repeated per a RAN paging cycle,
when it is determined that the frame being currently monitored corresponds to both the frame within the first PTW and the frame within the second PTW, determine a smallest value among a UE-specific cycle, a default DRX cycle, and the RAN paging cycle to be a paging monitoring cycle,
when it is determined that the frame being currently monitored corresponds to the frame within the first PTW but does not correspond to the frame within the second PTW, determine a smallest value among the UE-specific cycle and the default DRX cycle to be a paging monitoring cycle,

when it is determined that the frame being currently monitored does not correspond to the frame within the first PTW but corresponds to the frame within the second PTW, determine the RAN paging cycle to be a paging monitoring cycle, and

when it is determined that the frame being currently monitored does not correspond to the frame within the first PTW or the frame within the second PTW, determine not to perform paging monitoring.

# FIG. 1A

# FIG. 1B

# FIG. 1C

UE

gNB

1c-05

Paging occasion (PDCCH)

1c-10

Paging message (PDSCH)

# FIG. 1D

# FIG. 1E

# FIG. 1F

# FIG. 1G

UE operation

Receiving SIB — 1g-05

Camp on — 1g-10

RRC connection establishment — 1g-15

eDRX configuration — 1g-20

1g-30

RRC_IDLE

RRC Release — 1g-25

RRC_INACTIVE — 1g-50

In PTW? — 1g-35

Yes

No

1g-40

Paging cycle =
min (UE specific cycle,
Default DRX cycle)

No paging monitoring — 1g-45

In PTW? — 1g-55

Yes

No

1g-60

Paging cycle = min
(UE specific cycle, Default
cycle, RAN paging cycle)

RAN paging cycle — 1g-65

EP 4 376 517 A1

# FIG. 1H

# FIG. 1I

UE operation

Receiving SIB — 1i-05

Camp on — 1i-10

RRC connection establishment — 1i-15

eDRX configuration — 1i-20

RRC Release — 1i-25

RRC_IDLE — 1i-30

RRC_INACTIVE — 1i-50

In PTW_CN? — 1i-35

Yes

No

Paging cycle = min (UE specific cycle, Default DRX cycle) — 1i-40

No paging monitoring — 1i-45

In PTW_CN? — 1i-55

Yes

No

In PTW_RAN? — 1i-60

Yes

No

Paging cycle = min (UE specific cycle, Default cycle, RAN paging cycle) — 1i-65

Paging cycle = min (UE specific cycle, Default cycle) — 1i-70

In PTW_RAN? — 1i-75

Yes

No

Paging cycle = min (Default cycle, RAN paging cycle) — 1i-80

No paging monitoring — 1i-85

EP 4 376 517 A1

# FIG. 1J

# FIG. 1K

RF PROCESSOR 1k-10

BASEBAND PROCESSOR 1k-20

CONTROLLER 1k-50

MULTI-CONNECTION PROCESSOR 1k-52

BACKHAUL COMMUNICATOR 1k-30

STORAGE 1k-40

## INTERNATIONAL SEARCH REPORT

| International application No. |
|---|
| **PCT/KR2022/011686** |

**A. CLASSIFICATION OF SUBJECT MATTER**

**H04W 68/02**(2009.01)i; **H04W 68/00**(2009.01)i; **H04W 76/28**(2018.01)i; **H04W 76/27**(2018.01)i

According to International Patent Classification (IPC) or to both national classification and IPC

**B. FIELDS SEARCHED**

Minimum documentation searched (classification system followed by classification symbols)
H04W 68/02(2009.01); H04W 52/02(2009.01); H04W 76/04(2009.01)

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & keywords: eDRX, CN paging, RAN paging, NAS, RRC, connected, idle, inactive, PTW(Paging Time Window), length, start, UE specific DRX cycle, default DRX cycle, RAN paging cycle

**C. DOCUMENTS CONSIDERED TO BE RELEVANT**

| Category* | Citation of document, with indication, where appropriate, of the relevant passages | Relevant to claim No. |
|---|---|---|
| Y<br>A | XIAOMI COMMUNICATIONS. Discussion on e-DRX for Redcap Devices. R2-2102862, 3GPP TSG-RAN WG2 Meeting #113 bis electronic. [Online]. 02 April 2021.<br>See section 2.3. | 1-5,8-13<br>6-7,14-15 |
| Y | WO 2017-043767 A1 (LG ELECTRONICS INC.) 16 March 2017 (2017-03-16)<br>See paragraphs [0094] and [0173]. | 1-5,8-13 |
| Y | OPPO. Discussion on eDRX for RedCap UEs. R2-2104810, 3GPP TSG-RAN WG2 Meeting #114 electronic. [Online]. 11 May 2021.<br>See section 2.1. | 8 |
| A | HUAWEI et al. eDRX for RedCap UE. R2-2105636, 3GPP TSG-RAN WG2 Meeting #114-e, Electronic. 11 May 2021.<br>See section 2. | 1-15 |
| A | VIVO et al. Discussions on eDRX for RedCap UEs. R2-2104912, 3GPP TSG-RAN WG2 Meeting #114-e, Electronic. 11 May 2021.<br>See section 2. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2022** | **14 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/011686**

| Patent document cited in search report | Publication date (day/month/year) | Patent family member(s) | Publication date (day/month/year) |
|---|---|---|---|
| WO 2017-043767 A1 | 16 March 2017 | US 10616949 B2 | 07 April 2020 |
| | | US 2018-0242388 A1 | 23 August 2018 |

Form PCT/ISA/210 (patent family annex) (July 2022)